# EUROPEAN PATENT SPECIFICATION

(11) **EP 3 900 996 B1**
(45) Date of publication and mention of the grant of the patent: **24.04.2024**
(21) Application number: 19899286.9
(22) Date of filing: 04.12.2019
(51) Int. Cl.: B60W 30/165, B60W 10/04, G08G 1/00, G08G 1/09, G08G 1/16

(54) **VEHICLE OPERATION CONTROL DEVICE AND VEHICLE OPERATION CONTROL METHOD**
VORRICHTUNG ZUR STEUERUNG DES FAHRZEUGBETRIEBS UND VERFAHREN ZUR STEUERUNG DES FAHRZEUGBETRIEBS
DISPOSITIF DE COMMANDE DE FONCTIONNEMENT DE VÉHICULE ET PROCÉDÉ DE COMMANDE DE FONCTIONNEMENT DE VÉHICULE

(30) Priority: 19.12.2018 JP 2018237598
(43) Date of publication of application: 27.10.2021
(73) Proprietor: Hitachi, Ltd., Tokyo 100-8280 (JP)
(72) Inventor: TAKAHASHI, Junya, Tokyo 100-8280 (JP); SAKAYORI, Go, Tokyo 100-8280 (JP); MAEDA, Kenta, Tokyo 100-8280 (JP)
(74) Representative: Mewburn Ellis LLP
(86) International application number: PCT/JP2019/047338
(87) International publication number: WO 2020/129633

(56) References cited:
- WO-A1-2015/047177
- JP-A- 2008 105 663
- JP-A- 2012 043 444
- JP-A- 2012 043 444
- JP-A- 2018 065 466
- US-A1- 2008 078 600
- US-B1- 9 940 840

## Description

### Technical Field

The present invention relates to a vehicle motion control device and its method that control traveling of a vehicle such as an automobile in vehicle platooning.

### Background Art

Recently, in the field of automobiles, development of advanced driver-assistance systems (ADAS) and autonomous driving-related technologies has been progressing rapidly. Functions to automate part of driving operation such as adaptive cruise control, lane keep assist system, and emergency automatic brake have been put into practical use. However, all of these are systems that automatically control either longitudinal motion or lateral motion of the vehicle. In order to achieve a smooth vehicle motion in a traveling scene where the vehicle turns with acceleration/deceleration, e.g., on a curved road where the curvature is high and the lateral acceleration becomes excessive when traveling at a constant speed, when overtaking, when merging, or the like, control with the longitudinal motion and the lateral motion of the vehicle coordinating together is necessary.

Regarding the coordination between the longitudinal motion and the lateral motion generated in the vehicle, PTL 1 discloses a vehicle motion control method in which the lateral jerk (Gy_dot) of the vehicle having been input is multiplied by gain (Cxy) determined from the speed (V) and the lateral acceleration (Gy) and stored in advance, a control command that controls the longitudinal acceleration of the vehicle is generated based on the product, and the generated control command is output.

According to this method, the trajectory of the resultant acceleration vector (G) of longitudinal acceleration and lateral acceleration is vectored to draw a smooth curve in the coordinate system with the fixed center of gravity of the vehicle, which is called G-vectoring control (GVC). It is reported that according to this GVC, the emergency avoidance performance is greatly improved (see NPL 1).

For example, PTL 2 discloses a method of accelerating/decelerating based on a time change of a curve curvature in a traveling course ahead of the own vehicle. According to this method, it is possible to achieve a continuous deceleration from before the lateral acceleration is generated in the own vehicle to a turning transient period in which the absolute value in lateral acceleration increases. This technique is called Preview G-Vectoring Control (PGVC) because forward gaze information is added to the G-Vectoring control (see NPL 2).

Recently, in order to reduce traffic congestion and improve transportation efficiency in road transportation, development of an automatic follow-up traveling (also known as vehicle platooning) system at a minimum distance between vehicles has been advanced.

As described above, PTLs 1 and 2 illustrate a method of smoothly traveling a single vehicle by coordinating longitudinal motion and lateral motion when traveling on a curved road. However, neither PTL 1 nor 2 mentions an acceleration/deceleration method when a plurality of vehicles are in vehicle platooning.

On the other hand, regarding a method of traveling in vehicle platooning while exchanging information regarding acceleration/deceleration between a plurality of vehicles, e.g., PTL 3 discloses a method in which a platooning speed pattern is created as needed on the basis of the target speed pattern of the own vehicle and target speed patterns of the other vehicles, and consequently, running of the vehicles is controlled according to the platooning speed pattern. For example, PTL 4 discloses a method of sharing the driving plan set in advance for vehicles in a platoon and changing the order of the vehicle platooning in order from the vehicle whose start timing of deceleration control is later.

### Citation List

### Patent Literature

PTL 1: JP 2009-262701 A
PTL 2: JP 2012-030674 A
PTL 3: JP 2008-110620 A
PTL 4: JP 2008-204094 A
PTL 5: JP 2012 043444 discloses a Columnar Running Control System

### Non Patent Literature

NPL 1: M.Yamakado, J. Takahashi, S. Saito, A.Yokoyama, and M. Abe, Improvement in vehicle agility and stability by G-Vectoring control, Veh. Syst. Dyn. 48 (2010), pp. 231-254
NPL 2: Takahashi, J., et al., "Evaluation of Preview G-Vectoring Control to decelerate a vehicle prior to entry into a curve", International Journal of Automotive Technology, Vol. 14, No. 6, 2013, pp. 921-926

### Summary of Invention

### Technical Problem

However, in the control of acceleration/deceleration in PTLs 3 and 4, the longitudinal motion coordinated with the lateral motion described in PTLs 1 and 2 is not considered, and it is not clear how to achieve a smooth motion at the time of acceleration/deceleration accompanied by lateral motion in all vehicles traveling in vehicle platooning. For example, at the time of traveling on a curved road in vehicle platooning, deceleration control at the timing of the preceding vehicle may deteriorate the ride quality of the occupant of each vehicle (subsequent vehicle in particular).

The present invention has been made in view of the above circumstances, and an object of the present invention is to provide a vehicle motion control device and its method that can improve the comfort of the occupants of each vehicle when a plurality of vehicles travel in vehicle platooning.

### Solution to Problem

In order to solve the above problem, the vehicle motion control device and its method according to the present invention are as set forth in claims 1 and 15.

### Advantageous Effects of Invention

According to the present invention, it is possible to control, for example, the relationship between the longitudinal acceleration and the lateral acceleration generated during the period until the vehicle group having traveled in platooning in a straight line section reaches a steady turning state so as to suitably change for all the vehicles in the platoon, and it is possible to expect the effect of improving the comfort of the occupants of each vehicle.

Problems, configurations, and effects other than those described above will be made clear by the description of the following embodiments.

### Brief Description of Drawings

[FIG. 1] FIG. 1 is a view illustrating a part of the shape of a road including a curved section.
[FIG. 2] FIG. 2 is a view illustrating a travel state at the time of traveling on a curved road when the longitudinal acceleration control for vehicle platooning is performed by a conventional method 1, where (a) illustrates the lateral acceleration and the longitudinal acceleration of each vehicle, and (b) illustrates the distance between the vehicles.
[FIG. 3] FIG. 3 is a diagram illustrating the relationship between the lateral acceleration and the longitudinal acceleration of each vehicle at the time of traveling on a curved road when the longitudinal acceleration control for vehicle platooning is performed by a conventional method 1.
[FIG. 4] FIG. 4 is a view illustrating a travel state at the time of traveling on a curved road when the longitudinal acceleration control for vehicle platooning is performed by a conventional method 2, where (a) illustrates the lateral acceleration and the longitudinal acceleration of each vehicle, and (b) illustrates the distance between the vehicles.
[FIG. 5] FIG. 5 is a diagram illustrating the relationship between the lateral acceleration and the longitudinal acceleration of each vehicle at the time of traveling on a curved road when the longitudinal acceleration control for vehicle platooning is performed by a conventional method 2.
[FIG. 6] FIG. 6 is a view illustrating the definitions of a vehicle n, a vehicle n + 1, and a distance dn + 1 between the vehicle n and the vehicle n + 1.
[FIG. 7] FIG. 7 is a view illustrating a travel state at the time of traveling on a curved road when the negative longitudinal acceleration control for vehicle platooning is performed by the present invention, where (a) illustrates the lateral acceleration and the longitudinal acceleration of each vehicle, and (b) illustrates the distance between the vehicles.
[FIG. 8] FIG. 8 is a view illustrating a travel state at the time of traveling on a curved road when the positive longitudinal acceleration control for vehicle platooning is performed by the present invention, where (a) illustrates the lateral acceleration and the longitudinal acceleration of each vehicle, (b) illustrates the distance between the vehicles, and (c) illustrates the speed of each vehicle.
[FIG. 9] FIG. 9 is a diagram illustrating the relationship between the longitudinal acceleration and the lateral acceleration when the longitudinal acceleration control according to the present invention is applied.
[FIG. 10] FIG. 10 is a view illustrating a travel state at the time of traveling on a curved road when the longitudinal acceleration control for vehicle platooning is performed by the present invention, where (a) illustrates the lateral acceleration and the longitudinal acceleration of each vehicle, and (b) illustrates the distance between the vehicles.
[FIG. 11] FIG. 11 is a diagram illustrating the relationship between the longitudinal acceleration and the lateral acceleration of each vehicle at the time of traveling on a curved road when the longitudinal acceleration control for vehicle platooning is performed by the present invention.
[FIG. 12] FIG. 12 is a conceptual view of a vehicle equipped with a first embodiment of the vehicle motion control device according to the present invention.
[FIG. 13] FIG. 13 is a configuration diagram of the first embodiment of the vehicle motion control device according to the present invention.
[FIG. 14] FIG. 14 is a flowchart of the first embodiment of the vehicle motion control device according to the present invention.
[FIG. 15] FIG. 15 illustrates an example of a target track acquisition method according to the first embodiment of the vehicle motion control device according to the present invention.
[FIG. 16] FIG. 16 is a configuration diagram of a second embodiment of the vehicle motion control device according to the present invention.

### Description of Embodiments

Embodiments of the present invention are hereinafter described with reference to the drawings.

### [Overview of embodiments]

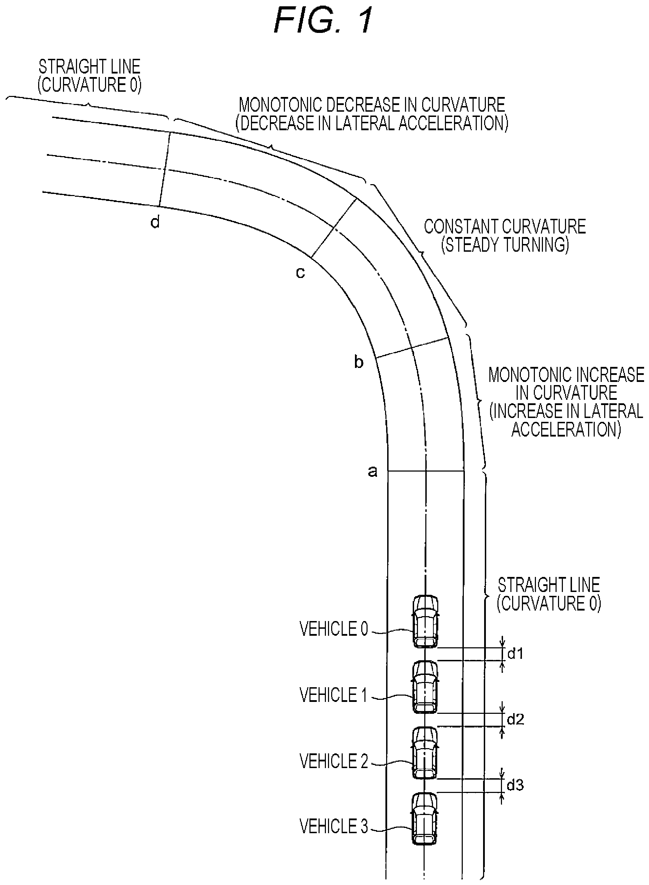

Prior to the description of the specific embodiments, in order to facilitate the understanding of the present invention, first, with reference to FIGS. 1 to 11, an acceleration control method for a group of four vehicles in platooning (vehicle 0, vehicle 1, vehicle 2, and vehicle 3) from traveling along a straight road, entering a curve, to a steady turning state will be described while comparing a difference among the conventional method 1, the conventional method 2, and the method according to the present invention. In this example, where the center of gravity of the vehicle is the origin, the longitudinal direction of the vehicle is defined as x, and the direction perpendicular thereto (lateral (right and left) direction of the vehicle) is defined as y, the acceleration in the x direction is defined as the longitudinal acceleration, and the acceleration in the y direction is defined as the lateral acceleration. The longitudinal acceleration is defined as positive in the vehicle forward direction, i.e., the longitudinal acceleration that increases the speed of the vehicle when traveling in the forward direction is positive. As for the lateral acceleration, when the vehicle is traveling in the forward direction, the lateral acceleration generated at the time of turning left (counterclockwise) is defined as positive and the reverse direction as negative. The left turning radius is defined as positive, and its reciprocal is defined as the vehicle travel curvature. Similarly, also with respect to the target track (travel trajectory), the left turning radius is defined as positive, and its reciprocal is defined as the target track curvature (curvature of travel trajectory). The steering angle in the left turning (counterclockwise) direction is defined as positive.

In the conventional method 1, it is assumed that each vehicle in platooning performs the G-Vectoring control independently of each other as longitudinal acceleration control for a curved road and as longitudinal acceleration control coordinated with lateral motion from the start of turning to the steady turning. In the conventional method 2, it is assumed that a speed profile is shared in vehicle platooning, and all the vehicles in the platoon perform the same longitudinal acceleration control at the same timing, whereby the vehicle travels without changing the distance between vehicles. In the conventional method 2, the G-Vectoring control is assumed to be performed similarly to the conventional method 1 as the longitudinal acceleration control for the curved road.

Regarding the description of the speed control of the present embodiment, FIG. 1 illustrates a conceptual view of a curved road (road including a curved section) having a straight line section (curvature 0), a section with monotonic change in curvature (lateral acceleration change) that is an easement curve section, and a constant curvature section (steady turning), and vehicles (vehicle 0, vehicle 1, vehicle 2, and vehicle 3) traveling (vehicle platooning) along the curved road. Each vehicle forms a platoon in the longitudinal direction (travel direction), and travels (vehicle platooning) in accordance with each target track (travel trajectory) corresponding to the course shape (road shape) so as to keep a predetermined distance between vehicles (d1: vehicle 1 - vehicle 0, d2: vehicle 2 - vehicle 1, d3: vehicle 3 - vehicle 2, for example d1 ≈ d2 ≈ d3), as well as sequentially entering and exiting the curve.

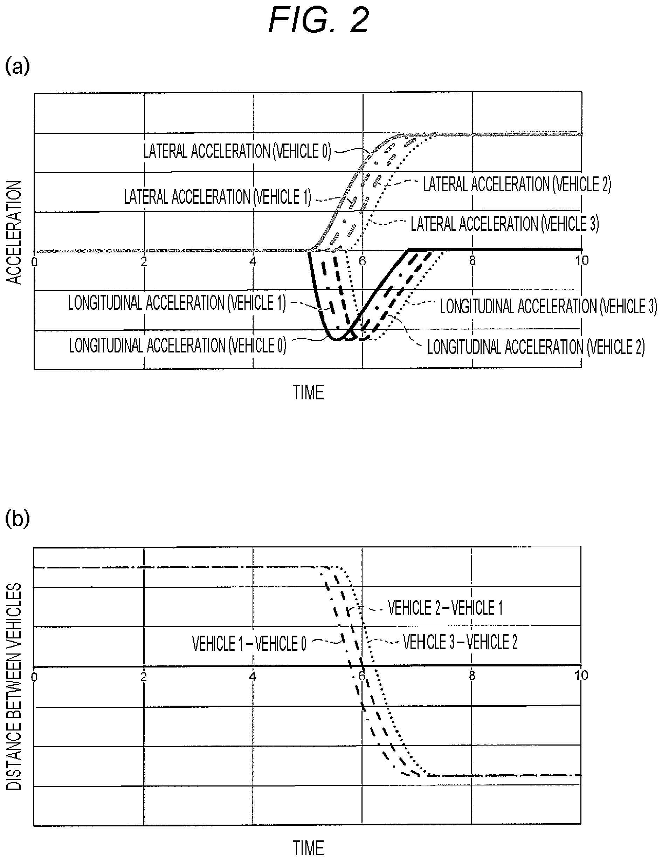

FIGS. 2 (a) and (b) illustrate the longitudinal acceleration and the lateral acceleration of each vehicle and the distance between vehicles (vehicle 1 - vehicle 0, vehicle 2 - vehicle 1, and vehicle 3 - vehicle 2) at the time of performing the conventional method 1, i.e., the G-vectoring control independently for each vehicle when the vehicle 0, the vehicle 1, the vehicle 2, and the vehicle 3 each travel on a curved road as illustrated in FIG. 1.

In this case, as illustrated in FIG. 2(a), each of the vehicle 0, the vehicle 1, the vehicle 2, and the vehicle 3 performs the longitudinal acceleration control (G-Vectoring control) coordinated with the lateral motion in a section where the curvature (≈ road curvature) of the travel trajectory increases and the (absolute value of) lateral acceleration increases. At this time, the negative longitudinal acceleration control is to be performed in order from the head vehicle 0, the distance between the vehicles is gradually reduced as illustrated in FIG. 2(b).

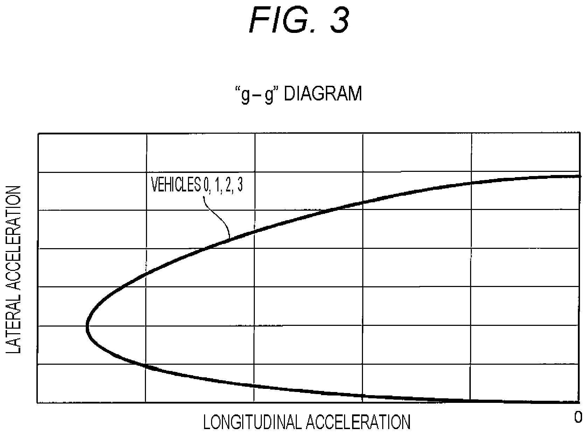

FIG. 3 illustrates a "g-g" diagram that is the relationship between the longitudinal acceleration and the lateral acceleration at this time. The relationship between them indicates the same change in all the vehicles, and that all the vehicles achieve a smooth transition from the longitudinal acceleration to the lateral acceleration.

However, as illustrated in FIG. 2(b), since in the configuration in which each vehicle independently performs G-Vectoring control, the distance between vehicles decreases when entering a curve, the risk of collision between vehicles in platooning increases, and avoiding it requires an increase in the distance between vehicles in platooning. In this case, the effect of improvement in transportation density due to vehicle platooning becomes small, which is the same situation as independent travel of each vehicle.

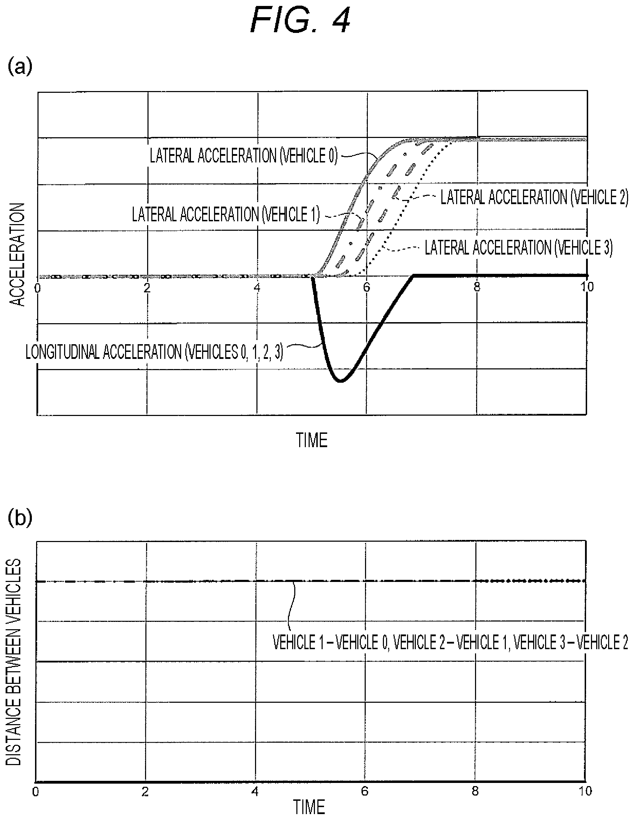

FIGS. 4(a) and (b) illustrate the longitudinal acceleration and the lateral acceleration of each vehicle and the distance between vehicles (vehicle 1 - vehicle 0, vehicle 2 - vehicle 1, and vehicle 3 - vehicle 2) at the time of performing the conventional method 2, i.e., at the time when the vehicles in platooning perform the longitudinal acceleration control with the same speed profile when the vehicle 0, the vehicle 1, the vehicle 2, and the vehicle 3 each travel on a curved road as illustrated in FIG. 1.

In this case, as illustrated in FIG. 4(a), all of the vehicle 0, the vehicle 1, the vehicle 2, and the vehicle 3 perform the longitudinal acceleration control identical to the G-Vectoring control starting at a timing when the curvature (≈ road curvature) of the travel trajectory of the vehicle 0 increases and the (absolute value of) lateral acceleration of the vehicle 0 increases. At this time, since all the vehicles perform simultaneously the same negative longitudinal acceleration control, as illustrated in FIG. 4(b), it is possible to maintain the distance between vehicles before the longitudinal acceleration control without changing the distance between the vehicles.

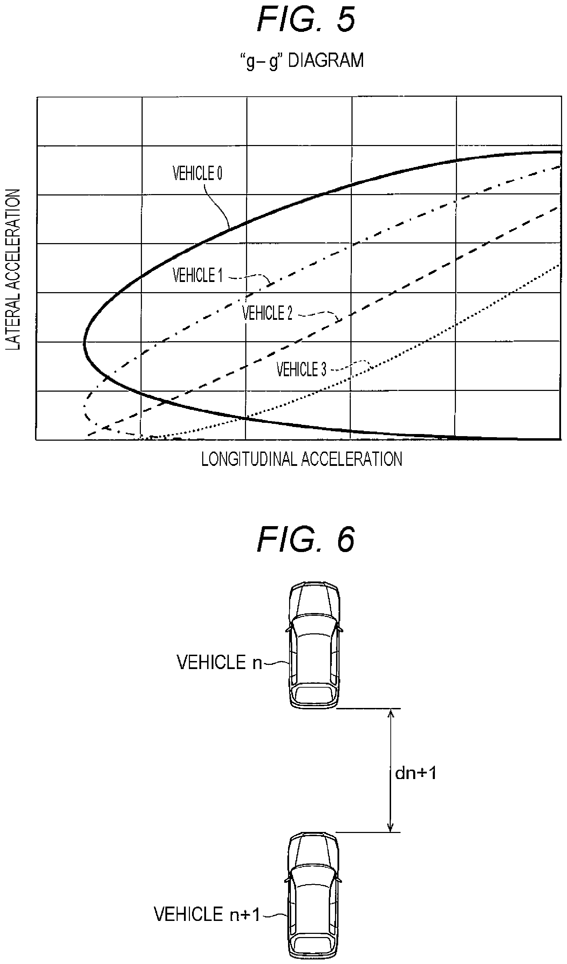

FIG. 5 illustrates a "g-g" diagram that is the relationship between the longitudinal acceleration and the lateral acceleration at this time. The relationship between them indicates that although the vehicle 0 achieves a smooth transition from the longitudinal acceleration to the lateral acceleration, and the more subsequent the vehicle is (vehicle 1, vehicle 2, and vehicle 3), the larger the negative longitudinal acceleration generated in a region where the lateral acceleration is small becomes, thereby increasing sections where the longitudinal acceleration and the lateral acceleration are not coordinated.

The present invention proposes a method of performing longitudinal acceleration control that is a longitudinal motion coordinated with a lateral motion in all vehicles so that the ride quality of all vehicles in vehicle platooning at the time of traveling on a curved road becomes suitable while appropriately keeping the distance between vehicles in platooning.

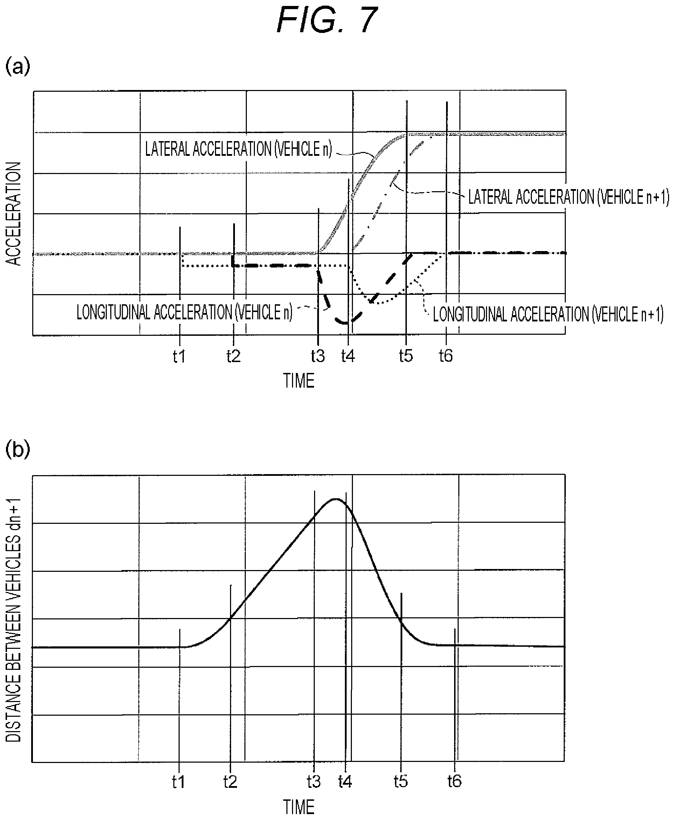

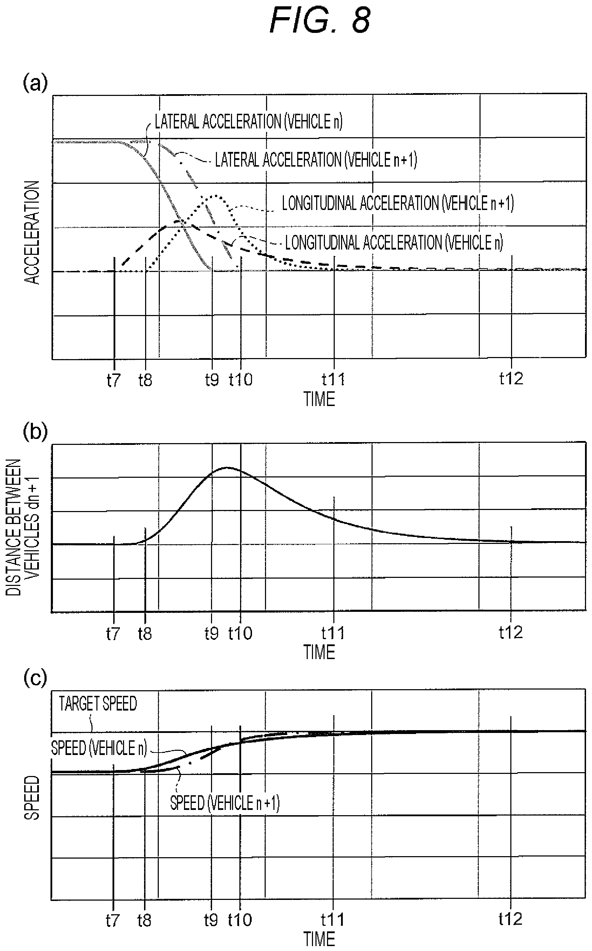

The features of the longitudinal acceleration control according to the present invention will be described below with reference to FIGS. 7(a), 7(b), and 8(a) to 8(c). In the description of FIGS. 7(a), 7(b), and 8(a) to 8(c), as illustrated in FIG. 6, among a plurality of vehicles in the platoon, the preceding vehicle traveling ahead is defined as the vehicle n, the subsequent vehicle following the vehicle n (travelling behind the vehicle n) is defined as the vehicle n + 1, and the distance between both the vehicles is defined as dn + 1 (where n is an integer equal to or greater than 0).

First, with reference to FIGS. 7(a) and (b), the longitudinal acceleration control in a travel scene (near side of a in FIG. 1 to b in FIG. 1) of transition from a straight traveling state to a steady turning state will be described. FIG. 7(a) illustrates time changes of lateral acceleration and longitudinal acceleration of the vehicle n and the vehicle n + 1, which is the subsequent vehicle of the vehicle n, in the platoon, and FIG. 7(b) illustrates a time change of the distance dn + 1 between both the vehicles. As illustrated in FIG. 7(a), it is indicated that each of the vehicle n and the vehicle n + 1 continuously generates (that is, decelerates) the negative longitudinal acceleration from before entering the curve (curvature (≈ road curvature) of the travel trajectory increases), that is, before the lateral acceleration is generated (before time t3 at the vehicle n and before time t4 at the vehicle n + 1) to the time when the steady turning (curvature (≈ road curvature) of the travel trajectory is constant), that is, when the lateral acceleration becomes substantially constant (time t5 at the vehicle n, time t6 at the vehicle n + 1). Here, in the present invention, the subsequent vehicle n + 1 starts decelerating before the absolute value of its lateral acceleration increases, that is, before starting turning, and the longitudinal acceleration at time t1 when the vehicle starts decelerating is smaller than the longitudinal acceleration generated in the vehicle n at the same time. That is, it is characterized in that the longitudinal acceleration control is performed so that the deceleration generated in the subsequent vehicle n + 1 at the same time becomes greater than the deceleration generated in the preceding vehicle n.

More specifically, as will be described later, the subsequent vehicle n + 1 can acquire the travel information of the vehicle n, and starts deceleration by generating the negative longitudinal acceleration at time t1 before time t3 at which the absolute value of the lateral acceleration of the vehicle n increases, that is, the curvature (≈ road curvature) of the travel trajectory of the vehicle n increases and the vehicle n starts turning. In the example illustrated in FIG. 7(a), at time t2 after time t1 and before time t3, the vehicle n also starts deceleration by generating the negative longitudinal acceleration before the absolute value of its lateral acceleration increases, that is, before starting turning, and the vehicle n and the vehicle n + 1 decelerate by generating the negative longitudinal acceleration from time t1 to time t3 so that the speed of the vehicle n + 1 at the same time (time t3) is smaller than the speed of the vehicle n at the time t3.

This increases the distance dn + 1 between both the vehicles as illustrated in FIG. 7(b).

Thereafter, from time t3 at which the preceding vehicle n enters the curve, the curvature of the travel trajectory increases and the absolute value of the lateral accelerations increases, and in a section of time t5 at which the curvature of the travel trajectory becomes constant to reach steady turning, the vehicle n performs longitudinal acceleration control that becomes the longitudinal motion coordinated with the lateral motion, e.g., G-Vectoring control. Furthermore, also as for the subsequent vehicle n + 1, from the time t4 at which the vehicle n + 1 enters the curve, the curvature of the travel trajectory increases and the absolute value of the lateral accelerations increases, and in a section of time t6 at which the curvature of the travel trajectory becomes constant to reach steady turning, the vehicle n + 1 performs longitudinal acceleration control that becomes the longitudinal motion coordinated with the lateral motion, e.g., G-Vectoring control. If the deceleration occurring in the vehicle n at this time is larger than the deceleration occurring in the vehicle n + 1 (for example, as illustrated in FIG. 7(a), if the control is performed so that the minimum value of the longitudinal acceleration of the vehicle n + 1 occurring in the period from time t4 to time t6 becomes larger than the minimum value of the longitudinal acceleration of the vehicle n occurring in the period from time t3 to time t5), the distance dn + 1 between both the vehicles starts decreasing. Here, the (negative) longitudinal acceleration of the vehicle n and/or the vehicle n + 1 is controlled so that the distance dn + 1 between both the vehicles decreases in a section (section from time t4 to time t5) where the absolute value of the lateral acceleration of the vehicle n increases and the absolute value of the lateral acceleration of the vehicle n + 1 increases.

Here, when the speed of both the vehicles is the same at the time before the start of the longitudinal acceleration control for the curve, that is, before the deceleration start time t1 of the vehicle n + 1, if the integration value of the longitudinal acceleration from time t2 to time t5 of the vehicle n and the integration value of the longitudinal acceleration from time t1 to time t6 of the vehicle n + 1 are the same, the speed at the time of steady turning of both the vehicles becomes the same speed and the turning becomes at the same lateral acceleration. Furthermore, by performing the longitudinal acceleration control of both the vehicles so that the integration value between time t1 and time t6 of the relative speed ΔVn + 1 of both the vehicles becomes zero, it is possible, at time t6 when the vehicle n + 1 starts steady turning, to make the distance dn + 1 between both the vehicles equal to the distance between vehicles before time t1.

This can make, for example, the distance between vehicles at the time of steady turning to be the distance between vehicles before the start of the turning, while achieving the longitudinal acceleration control that generates the longitudinal motion coordinated with the lateral motion in each of the vehicle n and the vehicle n + 1.

Next, with reference to FIGS. 8(a) to 8(c), the longitudinal acceleration control in a travel scene (from b in FIG. 1 to d in FIG. 1 and thereafter) of transitioning from a steady turning state to a straight traveling state will be described. In this travel scene, in addition to the positive longitudinal acceleration control coordinated with lateral motion, longitudinal acceleration control in which the distance between the vehicle n and the vehicle n + 1 is a target value (target distance between vehicles), and longitudinal acceleration control in which the speed of the vehicle n and the vehicle n + 1 is a target speed (target speed) are performed. FIG. 8(a) illustrates time changes of lateral acceleration and longitudinal acceleration of the vehicle n and the vehicle n + 1, which is the subsequent vehicle of the vehicle n, in the platoon, FIG. 8(b) illustrates a time change of the distance dn + 1 between both the vehicles, and FIG. 8(c) illustrates a time change of speed of both the vehicles. As illustrated in FIG. 8(a), it is indicated that each of the vehicle n and the vehicle n + 1 continuously generates (that is, accelerates) the positive longitudinal acceleration from steady turning (curvature (≈ road curvature) of the travel trajectory is constant) where the lateral acceleration is substantially constant (time t7 at vehicle n, and time t8 at vehicle n + 1) to the time (time t9 at vehicle n, and time t10 at vehicle n + 1) at which the lateral acceleration becomes zero. Both the vehicles increase the generated positive longitudinal acceleration from time t7 (vehicle n) and time t8 (vehicle n + 1) at which the curvature of the travel trajectory decreases and the absolute value of the lateral acceleration starts decreasing, and thereafter, decrease the positive longitudinal acceleration as the speed illustrated in FIG. 8(c) approaches the target speed.

Comparison of the longitudinal acceleration of the vehicle n with that of the vehicle n + 1 at this time indicates that the time at which the positive longitudinal acceleration occurs is earlier in the preceding vehicle n (time t7) than in the subsequent vehicle n + 1 (time t8) . That is, as will be described later, the preceding vehicle n can acquire the travel information of the subsequent vehicle n + 1, and generates the positive longitudinal acceleration in the vehicle n at time t7 earlier than time t8 at which the curvature of the travel trajectory of the subsequent vehicle n + 1 starts decreasing and the absolute value of the lateral acceleration starts decreasing. The vehicle n and the vehicle n + 1 accelerate by generating the positive longitudinal acceleration from time t7 to time t8 so that the speed of the vehicle n + 1 at time t8 becomes smaller than the speed of the vehicle n at the same time (time t8) . In the example illustrated in FIG. 8 (a), the longitudinal acceleration of the vehicle n + 1 in this section is zero, but it does not necessarily have to be zero. Time t11 at which the subsequent vehicle n + 1 reaches the target speed and its longitudinal acceleration becomes zero is earlier than time t12 at which the preceding vehicle n reaches the target vehicle speed and its longitudinal acceleration becomes zero. The (positive) longitudinal acceleration of both the vehicles is controlled so that the maximum value of the longitudinal acceleration generated in the turning transient period (from the steady turning state in which the curvature of the travel trajectory is constant to the straight travel state in which the curvature of the travel trajectory decreases and the absolute value of the lateral acceleration becomes zero) (from time t7 to time t9 at the vehicle n, and from time t8 to time t10 at the vehicle n + 1) becomes larger in the preceding vehicle n than the subsequent vehicle n + 1 (see near time t9 of FIG. 8(a)). Here, the (positive) longitudinal acceleration of the vehicle n + 1 and/or the vehicle n is controlled so that the speed of the vehicle n + 1 becomes greater than the speed of the vehicle n at time t10 when the curvature of the travel trajectory of the subsequent vehicle n + 1 decreases, the absolute value of the lateral acceleration decreases, and the absolute value (or the curvature of the travel trajectory) of the lateral acceleration becomes equal to or less than a value (here, a preset value of about zero) that can be regarded as straight traveling (see FIG. 8(c)).

This first increases the distance dn + 1 between both the vehicles as illustrated in FIG. 8(b) (increases to halfway between time t9 and time t10 in the example illustrated in FIG. 8(b)), and thereafter the distance dn + 1 between both the vehicles decreases in accordance with the acceleration of the subsequent vehicle n + 1.

Here, the integration value of the longitudinal acceleration from time t7 to time t12 of the vehicle n and the integration value from time t8 to time t11 of the vehicle n + 1 are set so as to be the difference between the speed before the start of the positive longitudinal acceleration control and the target speed, respectively, and further the longitudinal acceleration control is performed so that the sum of the integration value from time t7 and time t12 of the relative speed ΔVn + 1 of both the vehicles and the distance between vehicles at time t7 becomes the target distance between vehicles at the time of straight travel (after curve), whereby the vehicle n and the vehicle n + 1 can continue traveling at the target distance between vehicles when the longitudinal acceleration control for the curve is ended.

Thus, by considering the longitudinal acceleration control in which the distance between the vehicle n and the vehicle n + 1 is set as the target value and the longitudinal acceleration control in which the speed of the vehicle n and the vehicle n + 1 is set as the target value for the positive longitudinal acceleration control coordinated with the lateral motion when transitioning from the steady turning to the straight traveling, it is possible to reduce the number of times of increase and decrease of the longitudinal acceleration as compared with the case where the longitudinal acceleration control is individually performed, and improvement in the ride quality of the occupant can be expected.

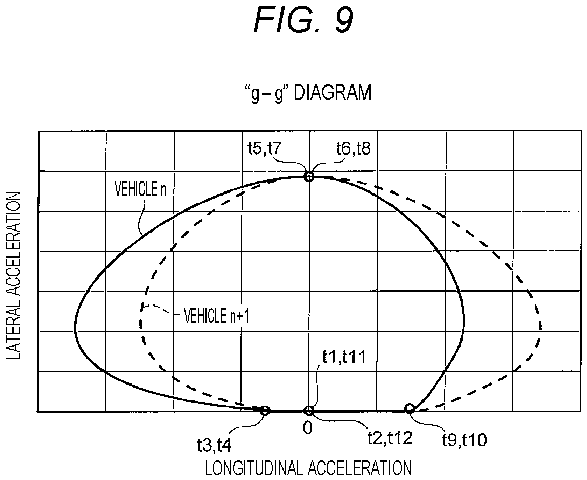

FIG. 9 illustrates a "g-g" diagram that is the relationship between the longitudinal acceleration and the lateral acceleration when performing the longitudinal acceleration control of the present invention illustrated in FIGS. 7(a), 7(b), and 8(a) to 8(c). FIG. 9 indicates that both the preceding vehicle n and the subsequent vehicle n + 1 have the relationship between the longitudinal acceleration and the lateral acceleration transitioning in a counterclockwise circle from the origin, and an acceleration change in which the ride quality where the lateral motion and the longitudinal motion are coordinated becomes suitable can be provided for both the vehicle n and the vehicle n + 1.

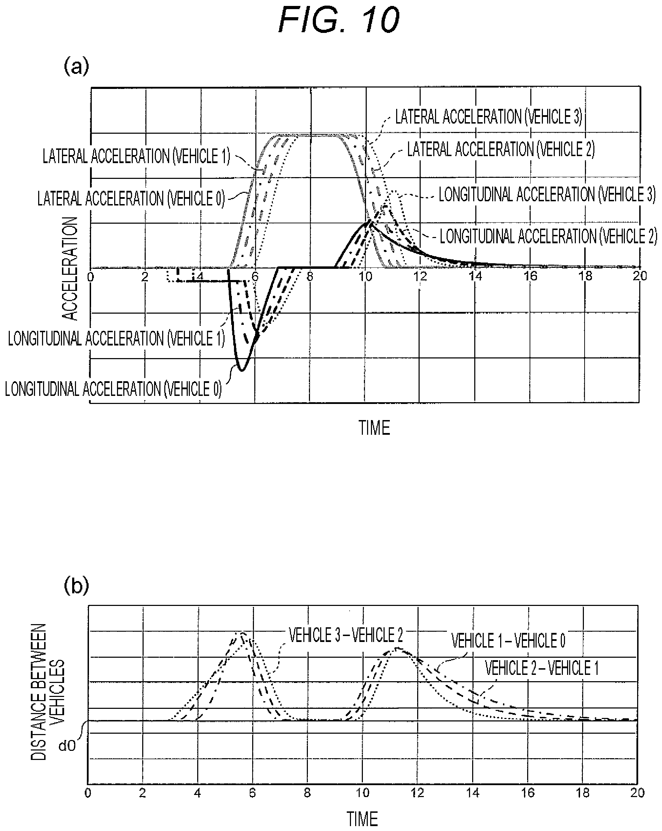

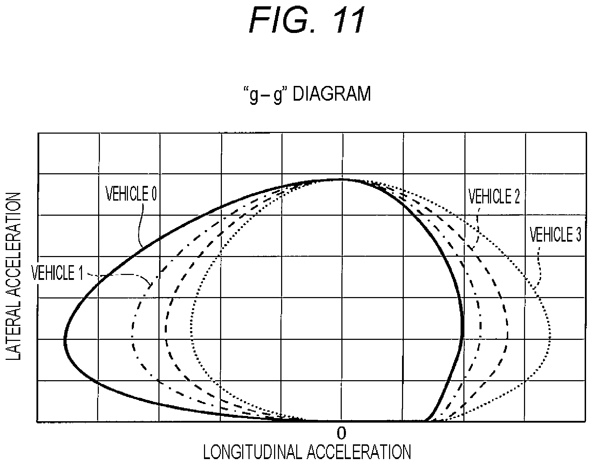

In order to confirm the effect of the present invention described above, FIGS. 10 (a), (b), and 11 illustrate an example in which the longitudinal acceleration control according to the present invention is provided for the four-vehicle platoon illustrated in FIG. 1. FIGS. 10 (a) and (b) illustrate the longitudinal acceleration and the lateral acceleration of the vehicle 0, the vehicle 1, the vehicle 2, and the vehicle 3, and the distance between the vehicles (vehicle 1 - vehicle 0, vehicle 2 - vehicle 1, and vehicle 3 - vehicle 2), and FIG. 11 illustrates the relationship ("g-g" diagram) between the longitudinal acceleration and the lateral acceleration of the vehicle 0, the vehicle 1, the vehicle 2, and the vehicle 3 at this time.

As illustrated in FIG. 10(a), different longitudinal acceleration control with respect to the curved road is performed for the vehicle 0, the vehicle 1, the vehicle 2, and the vehicle 3 entering and exiting the curved road, and as a result, as illustrated in FIG. 10(b), the distance between the vehicles (vehicle 1 - vehicle 0, vehicle 2 - vehicle 1, and vehicle 3 - vehicle 2) repeats increase and decrease twice from before the start of turning to the end of turning (specifically, after the distance between vehicles is once increased, an operation of decreasing the distance between vehicles), and finally converges to the initial distance d0 between vehicles. In the example illustrated in FIG. 10(a), in a scene where the head vehicle starts decelerating with respect to the curved road, decelerating is started by sequentially generating the negative longitudinal acceleration from the tail vehicle in the platoon. However, as will be described later, control may be performed so that the more the vehicle is behind, the smaller the generated longitudinal acceleration becomes (the larger the deceleration becomes). As illustrated in FIG. 11, it is indicated that the relationship between the longitudinal acceleration and the lateral acceleration at this time is in a circle shape from the origin in all the vehicles in the platoon (vehicle 0, vehicle 1, vehicle 2, and vehicle 3).

Thus, the longitudinal acceleration control according to the present invention can provide an acceleration change in which the ride quality where the lateral motion and the longitudinal motion are coordinated becomes suitable for all the vehicles in the platoon while keeping the distance between vehicles at a predetermined value or more even at the time of passing through a curved road in vehicle platooning.

The longitudinal acceleration control method at the time of passing through a curved road in vehicle platooning is not limited to the method described here, and it is only required to be a method of controlling the longitudinal acceleration of the vehicle n or the longitudinal acceleration of both the vehicle n and the vehicle n + 1 so that the distance dn + 1 between the preceding vehicle n in the platoon and the vehicle n + 1 subsequent to the vehicle n + 1 increases before the absolute value of the lateral acceleration of the vehicle n + 1 or the curvature (≈ road curvature) of the travel trajectory (trajectory where the vehicle n + 1 should travel on the road trajectory) increases, and controlling the longitudinal acceleration of the vehicle n and the vehicle n + 1 so that the speed of the vehicle n + 1 becomes smaller than the speed of the vehicle n when the absolute value of the lateral acceleration of the vehicle n + 1 or the curvature of the travel trajectory increases (that is, after the section where the absolute value of the lateral acceleration of the vehicle n and the vehicle n + 1 or the curvature of the travel trajectory increases). It is only required to be a method of controlling the longitudinal acceleration of the vehicle n or the longitudinal acceleration of both the vehicle n and the vehicle n + 1 so that the distance dn + 1 between the preceding vehicle n in the platoon and the subsequent vehicle n + 1 increases before the absolute value of the lateral acceleration of the subsequent vehicle n + 1 or the curvature (≈ road curvature) of the travel trajectory of the subsequent vehicle n + 1 decreases, and controlling the longitudinal acceleration of the vehicle n and the vehicle n + 1 so that the speed of the vehicle n + 1 becomes smaller than the speed of the vehicle n when the absolute value of the lateral acceleration of the vehicle n + 1 or the curvature of the travel trajectory of the subsequent vehicle n + 1 starts decreasing (that is, after the section in which the absolute value of the lateral acceleration of the vehicle and the vehicle n + 1 or the curvature of the travel trajectory decreases). A method other than the method illustrated in FIG. 7(a) may be a method in which, for example, by setting time t1 and time t2 in FIG. 7(a) to the same timing and setting the negative longitudinal acceleration generated in the vehicle n + 1 to a value (large deceleration) smaller than the negative longitudinal acceleration generated in the vehicle n, the distance dn + 1 between both the vehicles is increased before the absolute value of the lateral acceleration of the subsequent vehicle n + 1 increases. A method other than the method illustrated in FIG. 8(a) may be a method in which, for example in FIG. 8(a), by causing the vehicle n to generate a longitudinal acceleration greater than the vehicle n + 1 (the longitudinal acceleration here may not have to be zero) at a timing earlier than time t7, the distance dn + 1 between both the vehicles is increased before the absolute value of the lateral acceleration of the vehicle n + 1 decreases.

### [First embodiment]

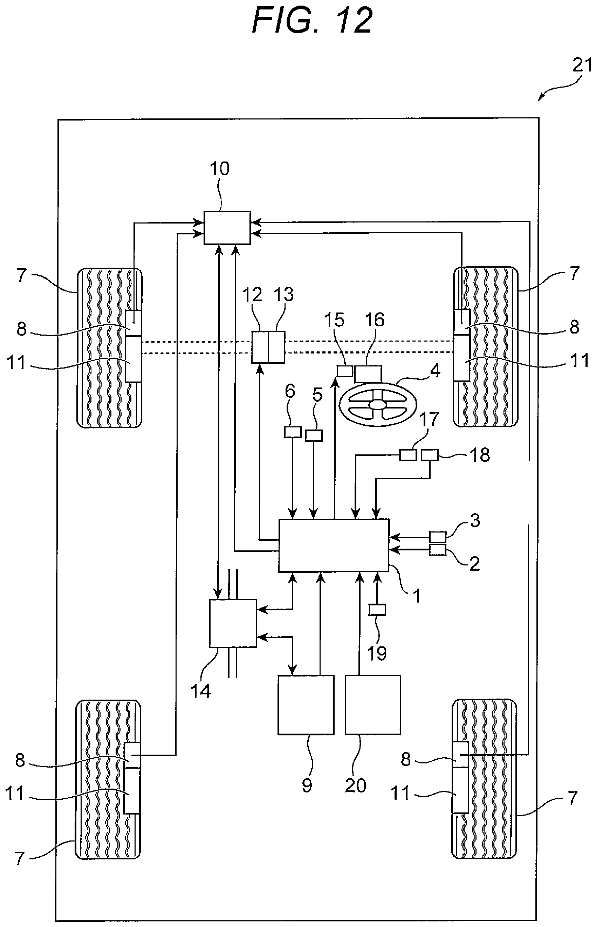

The configuration and operation of the vehicle motion control device according to the first embodiment of the present invention will be described below with reference to FIGS. 12 to 15. According to the first embodiment, the vehicle motion control device capable of executing the longitudinal acceleration control of the present invention described above is mounted on a vehicle (subsequent vehicle, preceding vehicle, or both) in a platoon, acquires travel information of a vehicle (hereinafter sometimes referred to as another vehicle) other than a vehicle (hereinafter sometimes referred to as an own vehicle) on which the vehicle motion control device is mounted, and automatically controls the acceleration (longitudinal acceleration and lateral acceleration) of the own vehicle.

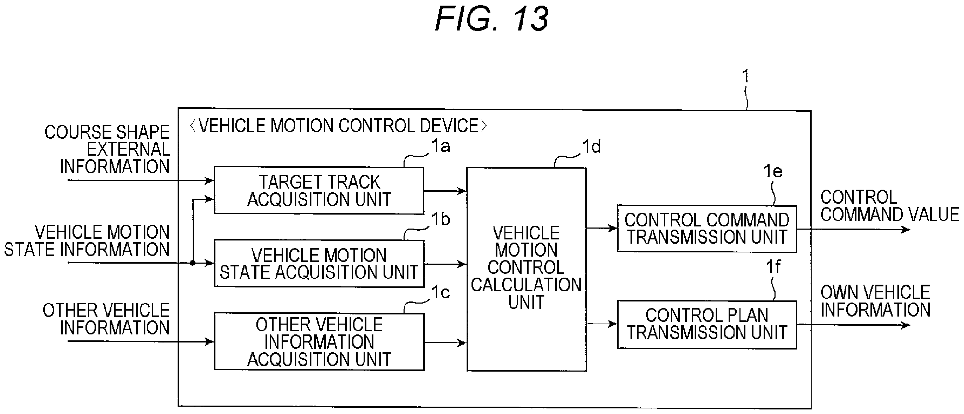

First, the configurations of a vehicle equipped with the vehicle motion control device according to the first embodiment of the present invention and the vehicle motion control device will be described with reference to FIGS. 12 and 13.

FIG. 12 illustrates a configuration diagram of the vehicle equipped with the vehicle motion control device according to the first embodiment of the present invention.

A vehicle motion control device 1 of the present embodiment is mounted on a vehicle 21, and performs calculation required for acceleration control based on various information obtained from sensors (acceleration sensor 2, gyro sensor 3, and wheel speed sensor 8) that acquire vehicle motion state information, sensors (steering angle sensor 5, brake pedal sensor 17, and accelerator pedal sensor 18) that acquire driver operation information, sensors (course shape acquisition sensor 6, own vehicle position detection sensor 9, and external information detection sensor 19) that acquire own vehicle travel route information, a vehicle external communication unit 20 that transmits/receives information by communicating with a control device outside the own vehicle, and the like, and, based on the calculation result, transmits a control command value through a communication line 14 to each control unit (brake control unit 10, drive torque control unit 12, and steering angle control unit 15) that performs drive control of actuators (brake actuator 11, drive actuator 13, and steering angle control actuator 16) capable of controlling the longitudinal acceleration and/or the lateral acceleration generated in the vehicle.

Here, the sensor that acquires the vehicle motion state information is only required to be a sensor or means capable of acquiring the vehicle speed, the longitudinal acceleration, the lateral acceleration, and the yaw rate, and is not limited to the above sensor configuration. For example, the vehicle speed may be acquired by differentiating the position information obtained by the global positioning system (GPS). The yaw rate, the longitudinal acceleration, and the lateral acceleration of the vehicle may be acquired using an image acquisition sensor such as a camera. The vehicle motion control device 1 does not need to have a direct sensor input. For example, necessary information may be acquired from another control unit (for example, brake control unit 10) through the communication line 14.

The sensor that acquires the driver operation information is only required to be capable of acquiring the operation amount of a steering wheel 4 by the driver and the operation amounts of the brake pedal and the accelerator pedal not illustrated, and similarly to the acquisition of the vehicle motion state information, the vehicle motion control device 1 does not need to directly have a sensor input. For example, necessary information may be acquired from another control unit (for example, brake control unit 10) through the communication line 14.

The sensor that acquires the own vehicle travel route information can use the global positioning system (GPS) as the own vehicle position detection sensor 9, can use a sensor, such as a camera and a radar, capable of detecting an obstacle around the own vehicle and capable of detecting a travelable region as the external information detection sensor 19, and can use a sensor capable of acquiring the travel route information of the own vehicle such as a navigation system as the course shape acquisition sensor 6. Here, the sensor that acquires the own vehicle travel route information is only required to be a means capable of acquiring the course shape (also known as road shape) in the travel direction of the own vehicle and the external information (travelable region), and is not limited to these sensors. For example, it may be a method of acquiring the course shape ahead of the own vehicle by communication with a data center or a device that transmits road information installed on the road, or may be a method of acquiring the course shape ahead of the own vehicle by acquiring images of the front of and/or around the own vehicle using an imaging means such as a camera. It may be a method of acquiring through the communication line 14 from a unit that calculates the course shape in the own vehicle travel direction by any of these means or a combination thereof.

The vehicle external communication unit 20 transmits/receives signals by communication with a control device installed outside the vehicle by wireless or wired communication, and may communicate with a communication method using a wireless communication means such as a cellular line or WiFi (registered trademark) or a communication method using direct contact with another vehicle or a road-side infrastructure system via a telegraph cable. Through the vehicle external communication unit 20, the vehicle motion control device 1 acquires (receives) travel information (other vehicle information) of another vehicle outside the own vehicle traveling in the platoon, and outputs (transmits) the travel information (own vehicle information) of the own vehicle to the other vehicle. Here, the travel information (other vehicle information, own vehicle information) includes a travel trajectory, a speed, a longitudinal acceleration control plan, and a distance between vehicles. The vehicle motion control device 1 may acquire a past travel data trajectory of the road surface on which the vehicle 21 travels by communication with the data center by the vehicle external communication unit 20. The other vehicle information may be acquired not by using the vehicle external communication unit 20 but by using a camera, a radar, or the like as the external information detection sensor 19 mounted on the vehicle 21.

Acceleration/deceleration actuators (brake actuator 11 and drive actuator 13) capable of controlling the longitudinal acceleration generated in the vehicle 21 are actuators capable of controlling the longitudinal acceleration generated in the vehicle 21 by controlling the force generated between a tire 7 and the road surface. An acceleration/deceleration actuator capable of controlling the longitudinal acceleration such as, for example, a combustion engine capable of controlling the braking/driving torque applied to the tire 7 and controlling the longitudinal acceleration of the vehicle 21 by controlling the combustion state, an electric motor capable of controlling the longitudinal acceleration such as, for example, a combustion engine capable of controlling the braking/driving torque applied to the tire 7 and controlling the longitudinal acceleration of the vehicle 21 by controlling the current, a transmission capable of controlling the longitudinal acceleration of the vehicle 21 by changing the gear ratio when transmitting the power to each wheel, or a friction brake generating the longitudinal acceleration to the vehicle 21 by pressing a brake disk against the brake pad of each wheel can be applied.

The vehicle motion control device 1 includes a calculation device having a storage region, a calculation processing capability, an input/output means of signals, and the like, and calculates a longitudinal acceleration command value to be generated by the vehicle 21 from various information obtained by the vehicle motion state information, the driver operation information, the own vehicle travel route information, and the like, and sends the longitudinal acceleration command value to drive controllers (brake control unit 10 and drive torque control unit 12) of the acceleration/deceleration actuators (brake actuator 11 and drive actuator 13) with the acceleration/deceleration actuators capable of generating the longitudinal acceleration that becomes the longitudinal acceleration command value as a longitudinal acceleration generation means. The vehicle motion control device 1 calculates a lateral motion command value to be generated in the vehicle 21 from various information obtained by the vehicle motion state information, the driver operation information, the own vehicle travel route information, and the like, and sends a steering angle command value as the lateral motion command value to a drive controller (steering angle control unit 15) of the steering angle control actuator 16 with the steering angle control actuator 16 capable of generating the lateral motion as a turning motion generation means.

Here, the signal sent from the vehicle motion control device 1 is not the longitudinal acceleration itself but is only required to be a signal capable of realizing the longitudinal acceleration command value by the acceleration/deceleration actuator. Similarly, the signal sent from the vehicle motion control device 1 is not the steering angle itself but is only required to be a signal capable of realizing the steering angle command value by the steering angle control actuator 16.

For example, if the acceleration/deceleration actuator is a combustion engine, a braking/driving torque command value capable of realizing the longitudinal acceleration command value is sent to the drive torque control unit 12. The drive signal of the combustion engine that realizes the longitudinal acceleration command value may be directly sent to the control actuator of the combustion engine not via the drive torque control unit 12. If a hydraulic friction brake that presses a brake pad against a brake disk by hydraulic pressure is used, a hydraulic pressure command value that realizes a longitudinal acceleration command value is sent to the brake control unit 10. The drive signal of the hydraulic friction brake drive actuator that realizes the longitudinal acceleration command value may be directly sent to the hydraulic friction brake drive actuator not via the brake control unit 10.

When realizing the longitudinal acceleration command value, the acceleration/deceleration actuator that performs the drive control may be changed in accordance with the longitudinal acceleration command value.

For example, in a case where the combustion engine and the hydraulic friction brake are provided as the acceleration/deceleration actuator, if the longitudinal acceleration command value is within a range that can be realized by the braking/driving torque control of the combustion engine, the combustion engine is driven and controlled, and if the longitudinal acceleration command value is a negative value within a range that cannot be realized by the braking/driving torque control of the combustion engine, the hydraulic friction brake is driven and controlled together with the combustion engine. In a case where the electric motor and the combustion engine are provided as the acceleration/deceleration actuator, the electric motor may be driven and controlled if the time change of the longitudinal acceleration is large, and the combustion engine may be driven and controlled if the time change of the longitudinal acceleration is small. In normal times, the longitudinal acceleration command value may be driven and controlled by the electric motor. If the longitudinal acceleration command cannot be realized by the electric motor due to a state of a battery or the like, another acceleration/deceleration actuator (combustion engine, hydraulic friction brake, and the like) may be driven and controlled.

As the communication line 14, a communication line and a communication protocol that are different depending on signals may be used. For example, Ethernet (registered trademark) may be used for communication with a sensor that acquires the own vehicle travel route information for which a large volume of data needs to be exchanged, and the controller area network (CAN) may be used for communication with each actuator.

FIG. 13 illustrates a configuration diagram of the vehicle motion control device 1 according to the first embodiment of the present invention. Hereinafter, a configuration for the above-described vehicle motion control device 1 to automatically control the acceleration (longitudinal acceleration and lateral acceleration) of the own vehicle (vehicle 21) in accordance with the course shape (road shape) at the time of traveling on a curved road will be mainly described.

As illustrated, the vehicle motion control device 1 includes a target track acquisition unit 1a, a vehicle motion state acquisition unit 1b, another vehicle information acquisition unit 1c, a vehicle motion control calculation unit 1d, a control command transmission unit 1e, and a control plan transmission unit 1f.

The target track acquisition unit 1a acquires a target track (travel trajectory) and a travelable region for traveling the vehicle 21 from the own vehicle travel route information (course shape and external information) and the vehicle motion state information. Here, the target track (travel trajectory) is a track on which the own vehicle is to travel on the course (road) trajectory, and may be created by a method of creating the target track from the course shape on which the own vehicle travels, or may be a method of acquiring a past travel data trajectory of the road surface on which the own vehicle travels by communication with the data center by the vehicle external communication unit 20 and creating based on the trajectory.

The vehicle motion state acquisition unit 1b acquires the motion state (travel speed, turning state, driver operation amount, and the like) of the vehicle 21 from the vehicle motion state information.

The other vehicle information acquisition unit 1c acquires travel information (other vehicle information) of another vehicle traveling in platoon by communication by the vehicle external communication unit 20 or the like. As other vehicle information, the other vehicle information acquisition unit 1c acquires the travel trajectory, the speed, the longitudinal acceleration control plan, the distance between vehicles, and the like of the preceding vehicle of the own vehicle in the platoon and/or the subsequent vehicle of the own vehicle. Here, the speed, the distance between vehicles, and the like of the other vehicle may be acquired by using the external information detection sensor 19 mounted on the own vehicle without using the vehicle external communication unit 20. As other vehicle information, the other vehicle information acquisition unit 1c may also receive a platoon continuation permission flag in addition to the information described above.

Based on the information obtained by the target track acquisition unit 1a, the vehicle motion state acquisition unit 1b, and the other vehicle information acquisition unit 1c, the vehicle motion control calculation unit 1d calculates a longitudinal acceleration command value for realizing the longitudinal acceleration control by an actuator mounted on the own vehicle and a longitudinal acceleration control plan for the curved road of the own vehicle (to be detailed later), sends the calculation result of the longitudinal acceleration command value to the control command transmission unit 1e, and sends the calculation result of the longitudinal acceleration control plan to the control plan transmission unit 1f.

Here, if the vehicle motion control device 1 controls the lateral acceleration in addition to the longitudinal acceleration, the vehicle motion control calculation unit 1d calculates a steering angle command value for following the target track by the actuator mounted on the own vehicle based on information obtained by the target track acquisition unit 1a, the vehicle motion state acquisition unit 1b, and the other vehicle information acquisition unit 1c, and sends the steering angle command value to the control command transmission unit 1e.

Based on the longitudinal acceleration command value or both the longitudinal acceleration command value and the steering angle command value created by the vehicle motion control calculation unit 1d, the control command transmission unit 1e transmits a control command value to each control unit (brake control unit 10, drive torque control unit 12, and steering angle control unit 15) that performs drive control of the actuator (brake actuator 11, drive actuator 13, and steering angle control actuator 16) capable of controlling the longitudinal acceleration and/or the tire actual steering angle.

On the other hand, the control plan transmission unit 1f sends the longitudinal acceleration control plan created by the vehicle motion control calculation unit 1d to the vehicle external communication unit 20, and the vehicle external communication unit 20 transmits travel information (own vehicle information) of the own vehicle including the longitudinal acceleration control plan to (the vehicle motion control device 1 mounted on) the other vehicle in the platoon.

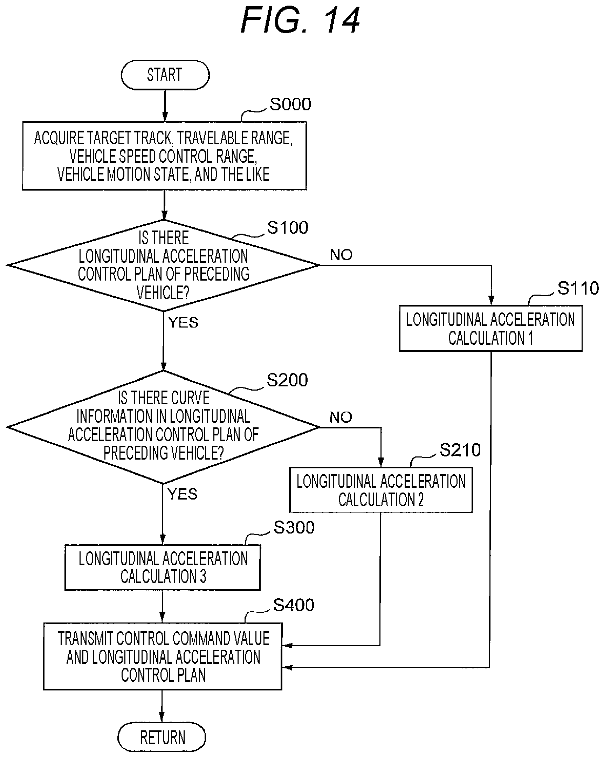

FIG. 14 illustrates a flowchart of the vehicle motion control device 1 according to the first embodiment.

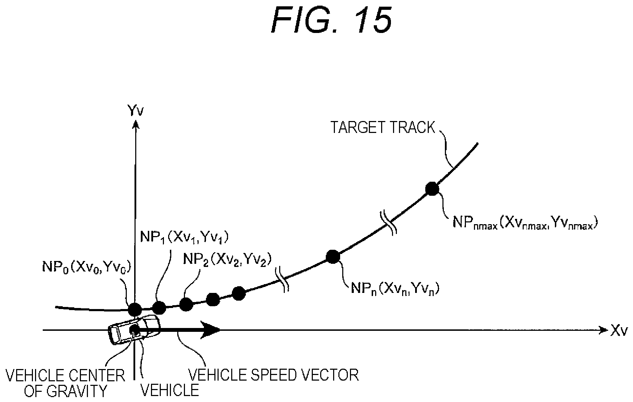

In S000, (target track acquisition unit 1a, vehicle motion state acquisition unit 1b, and other vehicle information acquisition unit 1c of) the vehicle motion control device 1 acquires a target track, a travelable range, a vehicle speed control range, a vehicle motion state, a preceding vehicle travel trajectory, a preceding vehicle speed, a preceding vehicle longitudinal acceleration control plan, a distance from the preceding vehicle, a subsequent vehicle travel trajectory, a subsequent vehicle speed, a subsequent vehicle longitudinal acceleration control plan, a distance from the subsequent vehicle (if necessary, maximum longitudinal acceleration, minimum longitudinal acceleration, and target distance between vehicles), and the like as described above. Here, as illustrated in FIG. 15, the target track is converted as node point position data NPₙ (Xvₙ, Yvₙ) on coordinates having the center of gravity of the vehicle as the origin, an Xv axis with the direction of the vehicle speed vector as positive, and a Yv axis orthogonal thereto. n is an integer that increases as 1, 2..., nmax toward the own vehicle travel direction with the point closest to the vehicle as 0. nmax is the maximum value of an acquirable node point position data number n. Yv₀, which is a Yv axis component of NP₀, is a lateral deviation of the vehicle. Each node point shall also have information such as a travelable range at the node point position and a vehicle speed control range. In a case where the own vehicle is at the head in vehicle platooning and there is no preceding vehicle, the vehicle motion control device 1 acquires information of "no preceding vehicle" as the preceding vehicle information. In a case where the own vehicle is at the tail in vehicle platooning and there is no subsequent vehicle, the vehicle motion control device 1 acquires information of "no subsequent vehicle" as the subsequent vehicle information.

In S100, (the vehicle motion control calculation unit 1d of) the vehicle motion control device 1 determines the presence/absence of a preceding vehicle longitudinal acceleration control plan. Here, if there is no a preceding vehicle longitudinal acceleration control plan, that is, if the own vehicle is at the head of the platoon, the processing proceeds to S110. If there is a preceding vehicle longitudinal acceleration control plan, the processing proceeds to S200.

In S110, (the vehicle motion control calculation unit 1d of) the vehicle motion control device 1 calculates the longitudinal acceleration command value and the longitudinal acceleration control plan from the target track, the travelable range, the vehicle speed control range, and the vehicle motion state as a longitudinal acceleration calculation 1. For example, if the vehicle speed is higher than the vehicle speed control range, (the vehicle motion control calculation unit 1d of) the vehicle motion control device 1 calculates the negative longitudinal acceleration command value so that the vehicle speed falls within the vehicle speed control range. If the target track has a curved road shape (a shape in which the absolute value of the road curvature (≈ curvature of travel trajectory) of the travel route increases to a maximum value or a substantially constant value, or a shape in which the absolute value of the road curvature (≈ curvature of travel trajectory) of the travel route decreases from a maximum value or a substantially constant value) and acceleration/deceleration control in accordance with the curved road is performed, a longitudinal acceleration command value based on the curved road shape is calculated. For example, (the vehicle motion control calculation unit 1d of) the vehicle motion control device 1 generates (decelerates) the negative longitudinal acceleration in a section where the absolute value of the road curvature (≈ curvature of travel trajectory) of the travel route increases and the absolute value of the lateral acceleration generated in the vehicle increases, and controls the longitudinal acceleration value so that the larger the temporal change of the lateral acceleration is, the smaller the generated longitudinal acceleration becomes (see FIGS. 7(a) and 10(a)). The (vehicle motion control calculation unit 1d of ) the vehicle motion control device 1 generates (accelerates) the positive longitudinal acceleration in a section where the absolute value of the road curvature (≈ curvature of travel trajectory) of the travel route decreases and the absolute value of the lateral acceleration generated in the vehicle decreases, and controls the longitudinal acceleration value so that the larger the temporal change of the lateral acceleration is, the larger the generated longitudinal acceleration becomes (see FIG. 8(a) and FIG. 10(a)). After the calculation, the processing proceeds to S400.

In S200, (the vehicle motion control calculation unit 1d of) the vehicle motion control device 1 determines the presence/absence of curve information in the preceding vehicle longitudinal acceleration control plan determined in S100, i.e., the longitudinal acceleration control plan for the curved road. The longitudinal acceleration control plan acquired here may be a longitudinal acceleration profile from the current time to a predetermined time ahead and a longitudinal acceleration control plan flag due to a curved road added to the longitudinal acceleration profile, may be the node point position information and the speed profile or the longitudinal acceleration profile at each node point position with the information added to the longitudinal acceleration profile having been set due to the curved road, or is only required to be a method with which the longitudinal acceleration control plan for the curved road of the preceding vehicle is known. If the curve information is not present, the processing proceeds to S210. If the curve information is present, the processing proceeds to S300.

In S210, (the vehicle motion control calculation unit 1d of) the vehicle motion control device 1 calculates, as a longitudinal acceleration calculation 2, the longitudinal acceleration command value and the longitudinal acceleration control plan of the own vehicle based on the preceding vehicle longitudinal acceleration control plan. Specifically, (the vehicle motion control calculation unit 1d of) the vehicle motion control device 1 calculates the longitudinal acceleration command value and the longitudinal acceleration control plan in which the relative speed with the preceding vehicle becomes zero, or the longitudinal acceleration command value and the longitudinal acceleration control plan in which the distance between the own vehicle and the preceding vehicle becomes the target distance between vehicles, so as to maintain the distance between the own vehicle and the preceding vehicle. Here, the target distance between vehicles may be a value set in advance for each vehicle in the platoon, or may be a value acquired by the vehicle external communication unit 20. The target distance between vehicles may be changed in accordance with the maximum longitudinal acceleration and/or the minimum longitudinal acceleration that can be generated in each vehicle in vehicle platooning. After the calculation, the processing proceeds to S400.

In S300, (the vehicle motion control calculation unit 1d of) the vehicle motion control device 1 calculates, as a longitudinal acceleration calculation 3, the longitudinal acceleration command value and the longitudinal acceleration control plan of the own vehicle based on the preceding vehicle longitudinal acceleration control plan and the curve information in the own vehicle travel direction. Specifically, (the vehicle motion control calculation unit 1d of) the vehicle motion control device 1 calculates the longitudinal acceleration command value and the longitudinal acceleration control plan added with a longitudinal acceleration control flag due to a curved road so that the distance between vehicles (decreases and) becomes the target distance between vehicles in a region where the distance between the own vehicle and the preceding vehicle increases before the curvature of the travel trajectory of the own vehicle increases or decreases and the absolute value of the lateral acceleration generated in the own vehicle increases or decreases as described above, the curvature of the travel trajectory of the own vehicle and the preceding vehicle becomes substantially constant, and the lateral acceleration of the own vehicle and the preceding vehicle becomes substantially constant. For the specific calculation method here, see also the description based on FIGS. 6 to 11. After the calculation, the processing proceeds to S400.

In S400, (the control command transmission unit 1e of) the vehicle motion control device 1 calculates and transmits the control command value of each actuator based on the longitudinal acceleration command value. For example, if the longitudinal acceleration is controlled by using an electric motor, a braking/driving torque command value for generating the longitudinal acceleration in the vehicle is sent to the control controller of the electric motor. The (control plan transmission unit 1f of) the vehicle motion control device 1 transmits the longitudinal acceleration control plan to the subsequent vehicle via the vehicle external communication unit 20.

As described above, in the first embodiment, the longitudinal acceleration of at least one of the preceding vehicle and the subsequent vehicle is controlled so that, in vehicle platooning where a plurality of vehicles travel in a platoon so as to maintain a predetermined distance between vehicles, the distance between vehicles between the preceding vehicle and the subsequent vehicle increases before the absolute value of the lateral acceleration of the subsequent vehicle or the curvature of the travel trajectory of the subsequent vehicle increases or decreases, and decreases after a section where the absolute value of the lateral acceleration of the preceding vehicle and the subsequent vehicle or the curvature of the travel trajectory of the preceding vehicle and the subsequent vehicle increases or decreases. More specifically, travel information of the vehicle traveling in platoon is transmitted/received between the vehicles, the longitudinal acceleration of at least one of the preceding vehicle and the subsequent vehicle is controlled so that the distance between vehicles increases before the absolute value of the lateral acceleration of the subsequent vehicle or the curvature of the travel trajectory of the subsequent vehicle increases or decreases, and the longitudinal acceleration of the preceding vehicle and the subsequent vehicle is controlled so that the distance between vehicles decreases after a section where the absolute value of the lateral acceleration of the preceding vehicle and the subsequent vehicle or the curvature of the travel trajectory of the preceding vehicle and the subsequent vehicle increases or decreases.

In other words, in a scene where the head vehicle starts decelerating on a curved road at the time of executing vehicle platooning following the head vehicle, the longitudinal acceleration of each vehicle is controlled so that negative longitudinal acceleration is generated (deceleration) from the tail vehicle in the platoon, or the more the vehicle is behind, the smaller the generated longitudinal acceleration becomes (the larger the deceleration becomes). The longitudinal acceleration of each vehicle is controlled so that the minimum value (maximum deceleration) of the longitudinal acceleration generated in a section where the absolute value of the lateral acceleration generated in the vehicle increases or the road curvature at the vehicle traveling position or the curvature of the vehicle travel trajectory increases becomes smaller toward the head vehicle (larger maximum deceleration), and the maximum value (maximum acceleration) of the longitudinal acceleration generated in a section where the absolute value of the lateral acceleration generated in the vehicle decreases or the road curvature at the vehicle traveling position or the curvature of the vehicle travel trajectory decreases becomes larger toward the tail vehicle (larger maximum acceleration).

Thus, it is possible to control, for example, the relationship between the longitudinal acceleration and the lateral acceleration generated during the period until the vehicle group having traveled in platooning in a straight line section reaches a steady turning state so as to suitably change for all the vehicles in the platoon, and it is possible to expect the effect of improving the comfort of the occupants of each vehicle.

### [Second embodiment]

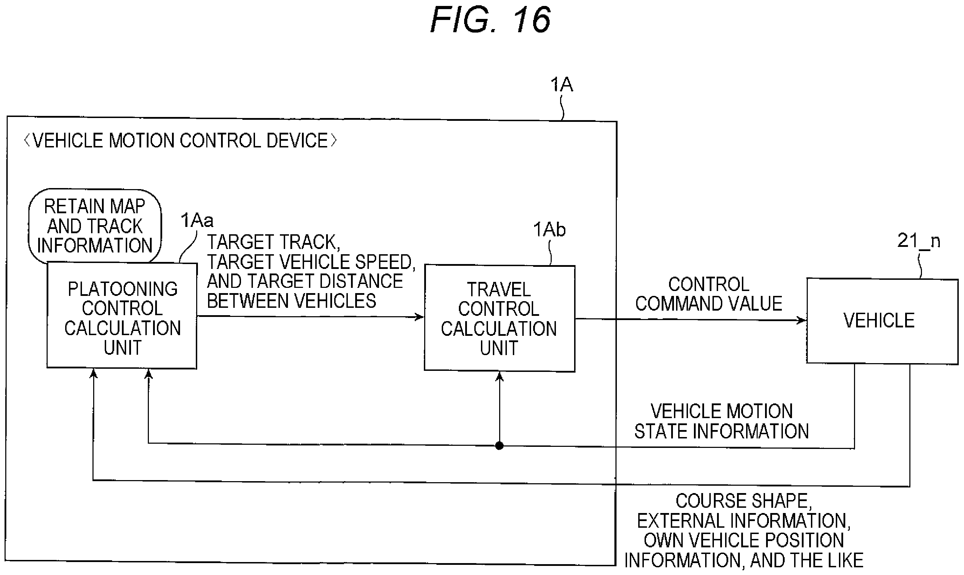

Next, the configuration and operation of the vehicle motion control device according to the second embodiment of the present invention will be described below with reference to FIG. 16. The above-described first embodiment has presented a method in which the vehicle motion control device 1 is mounted on the vehicle 21, and, when the vehicle 21 in vehicle platooning passes through a curved road, controls the longitudinal acceleration of the vehicle 21 based on the preceding vehicle longitudinal acceleration control plan and the curve information by communication with another vehicle (by the vehicle external communication unit 20) and realizes the longitudinal acceleration control according to the present invention. On the other hand, in the second embodiment, a vehicle motion control device 1A shares the travel information of each vehicle in vehicle platooning, and individually controls the longitudinal acceleration of each vehicle in vehicle platooning, thereby realizing the longitudinal acceleration control of the present invention.

FIG. 16 illustrates a configuration diagram of the vehicle motion control device 1A according to the second embodiment of the present invention. In the example illustrated in FIG. 16, the vehicle motion control device 1A is provided outside a vehicle 21_n, but it may be placed inside the vehicle 21_n, which is in vehicle platooning, similarly to the first embodiment. The vehicle motion control device 1A may be placed in a controller of a control center that externally controls the vehicle 21_n.

In the present embodiment, the vehicle motion control device 1A includes a calculation device having a storage region, a calculation processing capacity, an input/output means for signals, and the like, and mainly includes a platooning control calculation unit 1Aa and a travel control calculation unit 1Ab.

From the course shape, the external information, the own vehicle position information, the vehicle motion state information, and the like, the platooning control calculation unit 1Aa creates a target track, a target vehicle speed, and a target distance between vehicles of a vehicle group in vehicle platooning including n vehicles 21_n (in this example, n is a positive integer). Here, in a case where traffic information of the area where the vehicle group traveling in vehicle platooning is obtained as input to the vehicle motion control device 1A, the traffic information may be input to the platooning control calculation unit 1Aa to create the target track, the target vehicle speed, and the target distance between vehicles of the vehicle group.

From the target track, the target vehicle speed, the target distance between vehicles, and the vehicle motion state information, the travel control calculation unit 1Aa calculates the longitudinal acceleration command value as a control command value for generating longitudinal acceleration in each vehicle 21_n in accordance with the vehicle position in the platoon, and sends it to each vehicle 21_n of the vehicle group traveling in platoon. Note that the calculation method of the longitudinal acceleration of each vehicle 21_n using the travel information of each vehicle 21_n of the vehicle group in the travel control calculation unit 1Ab is the same as that of the above-described first embodiment, and hence, detailed description thereof will be omitted here.

The control command value to be sent here may be either the longitudinal acceleration command value itself or a control parameter that can be calculated so as to realize the longitudinal acceleration command value by the drive controller (brake control unit 10 and drive torque control unit 12) of the acceleration/deceleration actuator (brake actuator 11 and drive actuator 13) mounted on the vehicle 21_n.

More specifically, the same control algorithm as the longitudinal acceleration control command value calculation for the curved road performed in the travel control calculation unit 1Ab may be provided in the vehicle motion control calculation unit of the vehicle motion control device mounted on the vehicle 21_n, and the travel control calculation unit 1Ab may send the control parameter such as a gain and a threshold value of the control algorithm.

In a case where the longitudinal acceleration control ranges of the vehicles 21_n in vehicle platooning, i.e., the longitudinal acceleration maximum value and the longitudinal acceleration minimum value that can be generated by the longitudinal acceleration control are different by the vehicle, the distances between vehicles do not necessarily need to be the same. A target distance Dtgt_n+1 between the vehicle 21_n and the subsequent vehicle 21_n + 1 may be changed in accordance with the longitudinal acceleration control range controllable by the vehicle 21_n and the subsequent vehicle 21_n + 1. That is, the maximum longitudinal acceleration and the minimum longitudinal acceleration that can be generated in each vehicle 21_n in vehicle platooning, and the target distance between the vehicle 21_n and the subsequent vehicle 21_n + 1 may be set, and the target distance between vehicles may be changed in accordance with the maximum longitudinal acceleration and/or the minimum longitudinal acceleration.

Specifically, in a case where, for example, the minimum longitudinal acceleration of the vehicle 21_n + 1 is smaller than the minimum longitudinal acceleration of the vehicle 21_n, that is, in a case where the negative longitudinal acceleration controllable range is wider in the vehicle 21_n + 1 than in the vehicle 21_n, the target distance Dtgt_n + 1 between vehicles is set to a value larger than the target distance Dtgt_n between the vehicle 21_n and the vehicle 21_n - 1, which is the preceding vehicle of the vehicle 21_n. Here, the longitudinal acceleration controllable range is a value set in consideration of the ride quality of the occupant in addition to the restriction by the actuator of the vehicle, and the longitudinal acceleration controllable range may be a larger value in a case where there is no occupant in the vehicle than that in a case where there is an occupant in the vehicle.

As described above, in the second embodiment, by performing the longitudinal acceleration command value calculation in accordance with the vehicle position of each vehicle 21_n in the platoon, the vehicle motion control device 1A can realize the vehicle platooning similar to that illustrated in FIGS. 10(a), 10(b), and 11 of the first embodiment described above.

The present invention is not limited to the above-described embodiments, and includes various modifications. For example, the embodiments described above have been described in detail for the purpose of explaining the present invention in an easy-to-understand manner, and are not necessarily limited to those having all the described configurations. It is possible to replace part of the configuration of one embodiment with the configuration of the other embodiment, and it is also possible to add the configuration of the other embodiment to the configurations of one embodiment. Another configuration can be added to, deleted from, or replaced with part of the configuration of each embodiment.

Some or all of the above configurations, functions, processing units, processing means, and the like may be implemented with hardware by, for example, designing them with an integrated circuit. Each of the above configurations, functions, and the like may be implemented with software by the processor interpreting and executing a program implementing each function. Information such as a program, a table, and a file that implement each function can be stored in a storage device such as a memory, a hard disk, and a solid state drive (SSD), or a recording medium such as an IC card, an SD card, and a DVD.

The control lines and the information lines considered to be necessary for explanation are indicated, and not necessarily all the control lines and the information lines for the product are indicated. In practice, almost all configurations may be considered interconnected.

### Reference Signs List

1 vehicle motion control device (first embodiment)
1a target track acquisition unit
1b vehicle motion state acquisition unit
1c other vehicle information acquisition unit
1d vehicle motion control calculation unit
1e control command transmission unit
1f control plan transmission unit
1A vehicle motion control device (second embodiment)
1Aa platooning control calculation unit
1Ab travel control calculation unit
2 acceleration sensor
3 gyro sensor
4 steering wheel
5 steering angle sensor
6 course shape acquisition sensor
7 tire
8 wheel speed sensor
9 own vehicle position detection sensor
10 brake control unit
11 brake actuator
12 drive torque control unit
13 drive actuator
14 communication line
15 steering angle control unit
16 steering angle control actuator
17 brake pedal sensor
18 accelerator pedal sensor
19 external information detection sensor
20 vehicle external communication unit
21 vehicle
21_n each vehicle in vehicle group traveling in platoon (n: positive integer)

## Claims

1. A vehicle motion control device (1, 1A) that automatically controls, in accordance with a road shape in a vehicle travel direction, a relationship between longitudinal acceleration and lateral acceleration of at least one of a preceding vehicle and a subsequent vehicle, in which acceleration in a direction where a speed increases in a vehicle travel direction is positive and acceleration in a direction where a speed decreases is negative, **characterized by** the vehicle motion control device (1, 1A) controlling longitudinal acceleration of at least one of a preceding vehicle and a subsequent vehicle so that, in vehicle platooning by a plurality of vehicles:
a distance between a preceding vehicle and a subsequent vehicle increases before an absolute value of lateral acceleration of a subsequent vehicle or a curvature of a travel trajectory of a subsequent vehicle increases or decreases;
a distance between a preceding vehicle and a subsequent vehicle decreases after a section in which an absolute value of lateral acceleration of a preceding vehicle and a subsequent vehicle or a curvature of a travel trajectory of a preceding vehicle and a subsequent vehicle increases or decreases; and
a distance between a preceding vehicle and a subsequent vehicle is equal to or greater than d0 at any time during travel, wherein d0 is the distance between a preceding vehicle and a subsequent vehicle when the vehicles travel in platooning in a straight line section of the road.

2. The vehicle motion control device (1, 1A) according to claim 1, wherein
travel information of a vehicle traveling in platoon is transmitted/received between vehicles, and
longitudinal acceleration of at least one of a preceding vehicle and a subsequent vehicle is controlled so that the distance between vehicles increases before an absolute value of lateral acceleration of a subsequent vehicle or a curvature of a travel trajectory of a subsequent vehicle increases or decreases, and longitudinal acceleration of a preceding vehicle and a subsequent vehicle is controlled so that the distance between vehicles decreases after a section where an absolute value of lateral acceleration of a preceding vehicle and a subsequent vehicle or a curvature of a travel trajectory of a preceding vehicle and a subsequent vehicle increases or decreases.

3. The vehicle motion control device (1, 1A) according to claim 1, wherein negative longitudinal acceleration is generated in a subsequent vehicle before time t3 at which an absolute value of lateral acceleration of a preceding vehicle or a curvature of a travel trajectory of a preceding vehicle starts to increase.

4. The vehicle motion control device (1, 1A) according to claim 3, wherein speed of a subsequent vehicle at the time t3 is smaller than speed of a preceding vehicle at the time t3.

5. The vehicle motion control device (1, 1A) according to claim 1, wherein a minimum value of longitudinal acceleration of a subsequent vehicle generated in a section where an absolute value of lateral acceleration of a subsequent vehicle or a curvature of a travel trajectory of a subsequent vehicle increases is larger than a minimum value of longitudinal acceleration of a preceding vehicle generated in a section where an absolute value of lateral acceleration of a preceding vehicle or a curvature of a travel trajectory of a preceding vehicle increases.

6. The vehicle motion control device (1, 1A) according to claim 1, wherein longitudinal acceleration of at least one of a preceding vehicle and a subsequent vehicle is controlled so that the distance between vehicles decreases in a section where an absolute value of lateral acceleration of a preceding vehicle or a curvature of a travel trajectory of a preceding vehicle increases and an absolute value of lateral acceleration of a subsequent vehicle or a curvature of a travel trajectory of a subsequent vehicle increases.

7. The vehicle motion control device (1, 1A) according to claim 1, wherein positive longitudinal acceleration is generated in a preceding vehicle before time t8 at which an absolute value of lateral acceleration of a subsequent vehicle or a curvature of a travel trajectory of a subsequent vehicle starts to decrease.

8. The vehicle motion control device (1, 1A) according to claim 7, wherein speed of a subsequent vehicle at the time t8 is smaller than speed of a preceding vehicle at the time t8.

9. The vehicle motion control device (1, 1A) according to claim 1, wherein a maximum value of longitudinal acceleration of a subsequent vehicle generated in a section where an absolute value of lateral acceleration of a subsequent vehicle or a curvature of a travel trajectory of a subsequent vehicle decreases is larger than a maximum value of longitudinal acceleration of a preceding vehicle generated in a section where an absolute value of lateral acceleration of a preceding vehicle or a curvature of a travel trajectory of a preceding vehicle decreases.

10. The vehicle motion control device (1, 1A) according to claim 1, wherein longitudinal acceleration of at least one of a preceding vehicle and a subsequent vehicle is controlled so that speed of a subsequent vehicle becomes greater than speed of a preceding vehicle at time when an absolute value of lateral acceleration of a subsequent vehicle or a curvature of a travel trajectory of a subsequent vehicle decreases and an absolute value of lateral acceleration of a subsequent vehicle or a curvature of a travel trajectory of a subsequent vehicle becomes equal to or less than a value regarded as straight traveling.

11. The vehicle motion control device (1, 1A) according to claim 1, wherein the vehicle traveling in platoon generates negative longitudinal acceleration in a section where an absolute value of lateral acceleration generated in a vehicle increases, and controls longitudinal acceleration so that generated longitudinal acceleration becomes smaller as time change of lateral acceleration increases.

12. The vehicle motion control device (1, 1A) according to claim 1, wherein the vehicle traveling in platoon generates positive longitudinal acceleration in a section where an absolute value of lateral acceleration generated in a vehicle decreases, and controls longitudinal acceleration so that generated longitudinal acceleration becomes larger as time change of lateral acceleration increases.

13. The vehicle motion control device (1, 1A) according to claim 1, wherein maximum longitudinal acceleration and minimum longitudinal acceleration that can be generated in each vehicle traveling in the vehicle platooning, and a target distance between a preceding vehicle and a subsequent vehicle are set, and the target distance between vehicles is changed in accordance with at least one of the maximum longitudinal acceleration and the minimum longitudinal acceleration.

14. The vehicle motion control device (1, 1A) according to claim 1, wherein the vehicle motion control device (1, 1A) is mounted on a subsequent vehicle in the vehicle platooning to acquire travel information of a preceding vehicle and control longitudinal acceleration of a subsequent vehicle, is mounted on a preceding vehicle in the vehicle platooning to acquire travel information of a subsequent vehicle and control longitudinal acceleration of a preceding vehicle, or is provided outside a subsequent vehicle and a preceding vehicle in the vehicle platooning or on at least one of a subsequent vehicle and a preceding vehicle to share travel information of a subsequent vehicle and a preceding vehicle and control longitudinal acceleration of a subsequent vehicle and a preceding vehicle.

15. A vehicle motion control method of automatically controlling, in accordance with a road shape in a vehicle travel direction, a relationship between longitudinal acceleration and lateral acceleration of at least one of a preceding vehicle and a subsequent vehicle in which acceleration in a direction where a speed increases in a vehicle travel direction is positive and acceleration in a direction where a speed decreases is negative, **characterized by** the vehicle motion control method of controlling longitudinal acceleration of at least one of a preceding vehicle and a subsequent vehicle so that, in vehicle platooning by a plurality of vehicles:
a distance between a preceding vehicle and a subsequent vehicle increases before an absolute value of lateral acceleration of a subsequent vehicle or a curvature of a travel trajectory of a subsequent vehicle increases or decreases;
a distance between a preceding vehicle and a subsequent vehicle decreases after a section in which an absolute value of lateral acceleration of a preceding vehicle and a subsequent vehicle or a curvature of a travel trajectory of a preceding vehicle and a subsequent vehicle increases or decreases; and
a distance between a preceding vehicle and a subsequent vehicle is equal to or greater than d0 at any time during travel, wherein d0 is the distance between a preceding vehicle and a subsequent vehicle when the vehicles travel in platooning in a straight line section of the road.

## Patentansprüche

1. Fahrzeugbewegungssteuervorrichtung (1, 1A), die gemäß eines Straßenverlaufes in einer Fahrzeugfahrrichtung eine Beziehung zwischen Längsbeschleunigung und Querbeschleunigung von zumindest einem aus einem vorausfahrenden und einem nachfolgenden Fahrzeug automatisch steuert, wobei die Beschleunigung in eine Richtung, in der eine Geschwindigkeit in Fahrzeugfahrrichtung steigt, positiv ist und die Beschleunigung in eine Richtung, in der eine Geschwindigkeit sinkt, negativ ist, **dadurch gekennzeichnet, dass** die Fahrzeugbewegungssteuervorrichtung (1, 1A) die Längsbeschleunigung von zumindest einem aus einem vorausfahrenden und einem nachfolgenden Fahrzeug so steuert, dass bei Fahrzeug-Platooning durch eine Vielzahl von Fahrzeugen:
der Abstand zwischen einem vorausfahrenden Fahrzeug und einem nachfolgenden Fahrzeug sich vergrößert, bevor ein Absolutwert von Querbeschleunigung eines nachfolgenden Fahrzeugs oder eine Krümmung einer Fahrttrajektorie eines nachfolgenden Fahrzeugs zunimmt oder abnimmt;
der Abstand zwischen einem vorausfahrenden Fahrzeug und einem nachfolgenden Fahrzeug sich verkleinert, nachdem ein Abschnitt, in dem ein Absolutwert von Querbeschleunigung eines vorausfahrenden Fahrzeugs und eines nachfolgenden Fahrzeugs oder eine Krümmung einer Fahrttrajektorie eines vorausfahrenden Fahrzeugs und eines nachfolgenden Fahrzeugs zunimmt oder abnimmt; und
der Abstand zwischen einem vorausfahrenden und einem nachfolgenden Fahrzeug zu einem beliebigen Zeitpunkt während der Fahrt gleich oder größer als d0 ist, wobei d0 der Abstand zwischen einem vorausfahrenden und einem nachfolgenden Fahrzeug ist, wenn die Fahrzeuge in einem geradlinigen Straßenabschnitt in einer Platooning-Anordnung fahren.

2. Fahrzeugbewegungssteuervorrichtung (1, 1A) nach Anspruch 1, wobei
Fahrtinformationen eines Fahrzeugs, das in einer Platooning- Anordnung fährt, zwischen Fahrzeugen gesendet/empfangen werden und
eine Längsbeschleunigung von zumindest einem aus einem vorausfahrenden und einem nachfolgenden Fahrzeug so gesteuert wird, dass der Abstand zwischen den Fahrzeugen sich vergrößert, bevor ein Absolutwert von Querbeschleunigung eines nachfolgenden Fahrzeugs oder eine Krümmung einer Fahrttrajektorie eines nachfolgenden Fahrzeugs zunimmt oder abnimmt, und eine Längsbeschleunigung eines vorausfahrenden Fahrzeugs und eines nachfolgenden Fahrzeugs so gesteuert wird, dass der Abstand zwischen den Fahrzeugen sich nach einem Abschnitt, in dem ein Absolutwert von einer Querbeschleunigung eines vorausfahrenden Fahrzeugs und eines nachfolgenden Fahrzeugs oder eine Krümmung einer Fahrttrajektorie eines vorausfahrenden Fahrzeugs und eines nachfolgenden Fahrzeugs zunimmt oder abnimmt, verkleinert.

3. Fahrzeugbewegungssteuervorrichtung (1, 1A) nach Anspruch 1, wobei eine negative Längsbeschleunigung in einem nachfolgenden Fahrzeug vor einem Zeitpunkt t3 erzeugt wird, an dem ein Absolutwert von Querbeschleunigung eines vorausfahrenden Fahrzeugs oder eine Krümmung einer Fahrttrajektorie eines vorausfahrenden Fahrzeugs zuzunehmen beginnt.

4. Fahrzeugbewegungssteuervorrichtung (1, 1A) nach Anspruch 3, wobei die Geschwindigkeit eines nachfolgenden Fahrzeugs zu einem Zeitpunkt t3 geringer ist als die Geschwindigkeit eines vorausfahrenden Fahrzeugs zum Zeitpunkt t3.

5. Fahrzeugbewegungssteuervorrichtung (1, 1A) nach Anspruch 1, wobei ein Mindestwert von Längsbeschleunigung eines nachfolgenden Fahrzeugs, die in einem Abschnitt erzeugt wurde, in dem ein Absolutwert von Querbeschleunigung eines nachfolgenden Fahrzeugs oder eine Krümmung einer Fahrttrajektorie eines nachfolgenden Fahrzeugs zunimmt, größer ist als ein Mindestwert von einer Längsbeschleunigung eines vorausfahrenden Fahrzeugs, die in einem Abschnitt erzeugt wurde, in dem ein Absolutwert von Querbeschleunigung eines vorausfahrenden Fahrzeugs oder eine Krümmung einer Fahrttrajektorie eines vorausfahrenden Fahrzeugs zunimmt.

6. Fahrzeugbewegungssteuervorrichtung (1, 1A) nach Anspruch 1, wobei eine Längsbeschleunigung von zumindest einem aus einen vorausfahrenden und einem nachfolgenden Fahrzeug so gesteuert wird, dass der Abstand zwischen den Fahrzeugen in einem Abschnitt, in dem ein Absolutwert von einer Querbeschleunigung eines vorausfahrenden Fahrzeugs oder eine Krümmung einer Fahrttrajektorie eines vorausfahrenden Fahrzeugs zunimmt und ein Absolutwert von einer Querbeschleunigung eines vorausfahrenden Fahrzeugs oder eine Krümmung einer Fahrttrajektorie eines vorausfahrenden Fahrzeugs zunimmt, sich verkleinert.

7. Fahrzeugbewegungssteuervorrichtung (1, 1A) nach Anspruch 1, wobei eine positive Längsbeschleunigung in einem vorausfahrenden Fahrzeug vor einem Zeitpunkt t8 erzeugt wird, in dem ein Absolutwert von Querbeschleunigung eines nachfolgenden Fahrzeugs oder eine Krümmung einer Fahrttrajektorie eines nachfolgenden Fahrzeugs abzunehmen beginnt.

8. Fahrzeugbewegungssteuervorrichtung (1, 1A) nach Anspruch 7, wobei die Geschwindigkeit eines nachfolgenden Fahrzeugs zum Zeitpunkt t8 geringer ist als die Geschwindigkeit eines vorausfahrenden Fahrzeugs zum Zeitpunkt t8

9. Fahrzeugbewegungssteuervorrichtung (1, 1A) nach Anspruch 1, wobei der Höchstwert von Längsbeschleunigung eines nachfolgenden Fahrzeugs, die in einem Abschnitt erzeugt wird, in dem ein Absolutwert von einer Querbeschleunigung eines nachfolgenden Fahrzeugs oder eine Krümmung einer Fahrttrajektorie eines nachfolgenden Fahrzeugs abnimmt, größer ist als ein Höchstwert von einer Längsbeschleunigung eines vorausfahrenden Fahrzeugs, die in einem Abschnitt erzeugt wird, in dem ein Absolutwert von Querbeschleunigung eines vorausfahrenden Fahrzeugs oder eine Krümmung einer Fahrttrajektorie eines vorausfahrenden Fahrzeugs abnimmt.

10. Fahrzeugbewegungssteuervorrichtung (1, 1A) nach Anspruch 1, wobei eine Längsbeschleunigung von zumindest einem aus einem vorausfahrenden Fahrzeug und einem nachfolgenden Fahrzeug so gesteuert wird, dass die Geschwindigkeit eines nachfolgenden Fahrzeugs zu einem Zeitpunkt, an dem ein Absolutwert von einer Querbeschleunigung eines nachfolgenden Fahrzeugs oder eine Krümmung einer Fahrttrajektorie eines nachfolgenden Fahrzeugs abnimmt und ein Absolutwert von einer Querbeschleunigung eines nachfolgenden Fahrzeugs oder eine Krümmung einer Fahrttrajektorie eines nachfolgenden Fahrzeugs gleich oder kleiner als ein als gerades Fahren erachteter Wert wird, größer wird als die Geschwindigkeit eines vorausfahrenden Fahrzeugs.

11. Fahrzeugbewegungssteuervorrichtung (1, 1A) nach Anspruch 1, wobei das in Platoon-Anordnung fahrende Fahrzeug in einem Abschnitt, in dem ein Absolutwert von einer in einem Fahrzeug erzeugten Querbeschleunigung zunimmt, eine negative Längsbeschleunigung erzeugt und die Längsbeschleunigung so steuert, dass die erzeugte Längsbeschleunigung kleiner wird, während eine zeitliche Veränderung von Querbeschleunigung zunimmt.

12. Fahrzeugbewegungssteuervorrichtung (1, 1A) nach Anspruch 1, wobei das in Platoon-Anordnung fahrende Fahrzeug in einem Abschnitt, in dem ein Absolutwert von in einem Fahrzeug erzeugter Querbeschleunigung abnimmt, eine positive Längsbeschleunigung erzeugt und die Längsbeschleunigung so steuert, dass die erzeugte Längsbeschleunigung größer wird, während eine zeitliche Veränderung von einer Querbeschleunigung zunimmt.

13. Fahrzeugbewegungssteuervorrichtung (1, 1A) nach Anspruch 1, wobei die maximale Längsbeschleunigung und die minimale Längsbeschleunigung, die in jedem Fahrzeug erzeugt werden können, das in der Fahrzeug-Platooning-Anordnung fährt, und ein Soll-Abstand zwischen einem vorausfahrenden Fahrzeug und einem nachfolgenden Fahrzeug eingestellt sind und der Soll-Abstand zwischen den Fahrzeugen entsprechend zumindest einem aus der maximalen Längsbeschleunigung und der minimalen Längsbeschleunigung geändert wird.

14. Fahrzeugbewegungssteuervorrichtung (1, 1A) nach Anspruch 1, wobei die Fahrzeugbewegungssteuervorrichtung (1, 1A) auf einem nachfolgenden Fahrzeug in der Fahrzeug-Platooning-Anordnung angebracht ist, um Fahrtinformationen eines vorausfahrenden Fahrzeug zu erlangen und eine Längsbeschleunigung eines nachfolgenden Fahrzeugs zu steuern, auf einem vorausfahrenden Fahrzeug in der Fahrzeug-Platooning-Anordnung angebracht ist, um Fahrtinformationen eines nachfolgenden Fahrzeugs zu erlangen und Längsbeschleunigung eines vorausfahrenden Fahrzeugs zu steuern, oder außerhalb eines nachfolgenden Fahrzeugs und eines vorausfahrenden Fahrzeug in der Fahrzeug-Platooning-Anordnung oder auf zumindest einem aus einem nachfolgenden Fahrzeug und einem vorausfahrenden Fahrzeug bereitgestellt ist, um Fahrtinformationen eines nachfolgenden Fahrzeugs und eines vorausfahrenden Fahrzeugs zu teilen und Längsbeschleunigung eines nachfolgenden Fahrzeugs und eines vorausfahrenden Fahrzeugs zu steuern.

15. Fahrzeugbewegungssteuerverfahren des automatischen Steuerns einer Beziehung zwischen Längsbeschleunigung und Querbeschleunigung von zumindest einem aus einem vorausfahrenden und einem nachfolgenden Fahrzeug gemäß eines Straßenverlaufes in einer Fahrzeugfahrrichtung, wobei die Beschleunigung in eine Richtung, in der eine Geschwindigkeit in Fahrzeugfahrrichtung steigt, positiv ist und die Beschleunigung in eine Richtung, in der eine Geschwindigkeit sinkt, negativ ist, **dadurch gekennzeichnet, dass** das Fahrzeugbewegungssteuerverfahren die Längsbeschleunigung von zumindest einem aus einem vorausfahrenden und einem nachfolgenden Fahrzeug so steuert, dass bei Fahrzeug-Platooning durch eine Vielzahl von Fahrzeugen:
der Abstand zwischen einem vorausfahrenden Fahrzeug und einem nachfolgenden Fahrzeug sich vergrößert, bevor ein Absolutwert von Querbeschleunigung eines nachfolgenden Fahrzeugs oder eine Krümmung einer Fahrttrajektorie eines nachfolgenden Fahrzeugs zunimmt oder abnimmt;
der Abstand zwischen einem vorausfahrenden Fahrzeug und einem nachfolgenden Fahrzeug sich verkleinert, nachdem ein Abschnitt, in dem ein Absolutwert von Querbeschleunigung eines vorausfahrenden Fahrzeugs und eines nachfolgenden Fahrzeugs oder eine Krümmung einer Fahrttrajektorie eines vorausfahrenden Fahrzeugs und eines nachfolgenden Fahrzeugs zunimmt oder abnimmt; und
der Abstand zwischen einem vorausfahrenden und einem nachfolgenden Fahrzeug zu einem beliebigen Zeitpunkt während der Fahrt gleich oder größer als d0 ist, wobei d0 der Abstand zwischen einem vorausfahrenden und einem nachfolgenden Fahrzeug ist, wenn die Fahrzeuge in einem geradlinigen Straßenabschnitt in einer Platooning-Anordnung fahren.

## Revendications

1. Dispositif de commande de mouvement de véhicule (1, 1A) qui commande automatiquement, en fonction de la forme d'une route dans une direction de déplacement de véhicule, une relation entre l'accélération longitudinale et l'accélération latérale d'au moins l'un parmi un véhicule précédent et un véhicule suivant, dans lequel l'accélération dans une direction où une vitesse augmente dans une direction de déplacement de véhicule est positive et l'accélération dans une direction où une vitesse diminue est négative, **caractérisé par** le dispositif de commande de mouvement de véhicule (1, 1A) régulant l'accélération longitudinale d'au moins l'un parmi un véhicule précédent et un véhicule suivant de sorte que, dans un convoi de véhicules formé d'une pluralité de véhicules :
une distance entre un véhicule précédent et un véhicule suivant augmente avant qu'une valeur absolue d'accélération latérale d'un véhicule suivant ou qu'une courbure d'une trajectoire de déplacement d'un véhicule suivant augmente ou diminue ;
une distance entre un véhicule précédent et un véhicule suivant diminue après une section dans laquelle une valeur absolue d'accélération latérale d'un véhicule précédent et d'un véhicule suivant ou une courbure d'une trajectoire de déplacement d'un véhicule précédent et d'un véhicule suivant augmente ou diminue ; et
une distance entre un véhicule précédent et un véhicule suivant est supérieure ou égale à d0 à tout moment pendant le déplacement, dans lequel d0 est la distance entre un véhicule précédent et un véhicule suivant lorsque les véhicules se déplacent en convoi dans une section en ligne droite de la route.

2. Dispositif de commande de mouvement de véhicule (1, 1A) selon la revendication 1, dans lequel
des informations de déplacement d'un véhicule se déplaçant en convoi sont transmises/reçues entre les véhicules, et
l'accélération longitudinale d'au moins l'un parmi un véhicule précédent et un véhicule suivant est régulée de sorte que la distance entre les véhicules augmente avant qu'une valeur absolue d'accélération latérale d'un véhicule suivant ou une courbure d'une trajectoire de déplacement d'un véhicule suivant augmente ou diminue, et l'accélération longitudinale d'un véhicule précédent et d'un véhicule suivant est régulée de sorte que la distance entre les véhicules diminue après une section où une valeur absolue d'accélération latérale d'un véhicule précédent et d'un véhicule suivant ou une courbure d'une trajectoire de déplacement d'un véhicule précédent et d'un véhicule suivant augmente ou diminue.

3. Dispositif de commande de mouvement de véhicule (1, 1A) selon la revendication 1, dans lequel une accélération longitudinale négative est générée dans un véhicule suivant avant un temps t3 auquel une valeur absolue d'accélération latérale d'un véhicule précédent ou une courbure d'une trajectoire de déplacement d'un véhicule précédent commence à augmenter.

4. Dispositif de commande de mouvement de véhicule (1, 1A) selon la revendication 3, dans lequel la vitesse d'un véhicule suivant au temps t3 est inférieure à la vitesse d'un véhicule précédent au temps t3.

5. Dispositif de commande de mouvement de véhicule (1, 1A) selon la revendication 1, dans lequel une valeur minimale d'accélération longitudinale d'un véhicule suivant générée dans une section où une valeur absolue d'accélération latérale d'un véhicule suivant ou une courbure d'une trajectoire de déplacement d'un véhicule suivant augmente est supérieure à une valeur minimale d'accélération longitudinale d'un véhicule précédent générée dans une section où une valeur absolue d'accélération latérale d'un véhicule précédent ou une courbure d'une trajectoire de déplacement d'un véhicule précédent augmente.

6. Dispositif de commande de mouvement de véhicule (1, 1A) selon la revendication 1, dans lequel l'accélération longitudinale d'au moins l'un parmi un véhicule précédent et un véhicule suivant est régulée de sorte que la distance entre les véhicules diminue dans une section où une valeur absolue d'accélération latérale d'un véhicule précédent ou une courbure d'une trajectoire de déplacement d'un véhicule précédent augmente et une valeur absolue d'accélération latérale d'un véhicule suivant ou une courbure d'une trajectoire de déplacement d'un véhicule suivant augmente.

7. Dispositif de commande de mouvement de véhicule (1, 1A) selon la revendication 1, dans lequel une accélération longitudinale positive est générée dans un véhicule précédent avant un temps t8 auquel une valeur absolue d'accélération latérale d'un véhicule suivant ou une courbure d'une trajectoire de déplacement d'un véhicule suivant commence à diminuer.

8. Dispositif de commande de mouvement de véhicule (1, 1A) selon la revendication 7, dans lequel la vitesse d'un véhicule suivant au temps t8 est inférieure à la vitesse d'un véhicule précédent au temps t8.

9. Dispositif de commande de mouvement de véhicule (1, 1A) selon la revendication 1, dans lequel une valeur maximale d'accélération longitudinale d'un véhicule suivant générée dans une section où une valeur absolue d'accélération latérale d'un véhicule suivant ou une courbure d'une trajectoire de déplacement d'un véhicule suivant diminue est supérieure à une valeur maximale d'accélération longitudinale d'un véhicule précédent générée dans une section où une valeur absolue d'accélération latérale d'un véhicule précédent ou une courbure d'une trajectoire de déplacement d'un véhicule précédent diminue.

10. Dispositif de commande de mouvement de véhicule (1, 1A) selon la revendication 1, dans lequel l'accélération longitudinale d'au moins l'un parmi un véhicule précédent et un véhicule suivant est régulée de sorte que la vitesse d'un véhicule suivant devient supérieure à la vitesse d'un véhicule précédent à un temps auquel une valeur absolue d'accélération latérale d'un véhicule suivant ou une courbure d'une trajectoire de déplacement d'un véhicule suivant diminue et une valeur absolue d'accélération latérale d'un véhicule suivant ou une courbure d'une trajectoire de déplacement d'un véhicule suivant devient inférieure ou égale à une valeur considérée comme un déplacement en ligne droite.

11. Dispositif de commande de mouvement de véhicule (1, 1A) selon la revendication 1, dans lequel le véhicule se déplaçant en convoi génère une accélération longitudinale négative dans une section où une valeur absolue d'accélération latérale générée dans un véhicule augmente, et régule l'accélération longitudinale de sorte que l'accélération longitudinale générée diminue lorsque le changement au cours du temps de l'accélération latérale augmente.

12. Dispositif de commande de mouvement de véhicule (1, 1A) selon la revendication 1, dans lequel le véhicule se déplaçant en convoi génère une accélération longitudinale positive dans une section où une valeur absolue d'accélération latérale générée dans un véhicule diminue, et régule l'accélération longitudinale de sorte que l'accélération longitudinale générée augmente lorsque le changement au cours du temps de l'accélération latérale augmente.

13. Dispositif de commande de mouvement de véhicule (1, 1A) selon la revendication 1, dans lequel l'accélération longitudinale maximale et l'accélération longitudinale minimale qui peuvent être générées dans chaque véhicule se déplaçant dans le convoi de véhicules, et une distance cible entre un véhicule précédent et un véhicule suivant sont définies, et la distance cible entre les véhicules est modifiée selon au moins l'une de l'accélération longitudinale maximale et l'accélération longitudinale minimale.

14. Dispositif de commande de mouvement de véhicule (1, 1A) selon la revendication 1, le dispositif de commande de mouvement de véhicule (1, 1A) étant monté sur un véhicule suivant dans le convoi de véhicules pour acquérir des informations de déplacement d'un véhicule précédent et réguler l'accélération longitudinale d'un véhicule suivant, étant monté sur un véhicule précédent dans le convoi de véhicules pour acquérir des informations de déplacement d'un véhicule suivant et réguler l'accélération longitudinale d'un véhicule précédent, ou étant disposé à l'extérieur d'un véhicule suivant et d'un véhicule précédent dans le convoi de véhicules ou sur au moins l'un parmi un véhicule suivant et un véhicule précédent pour partager des informations de déplacement d'un véhicule suivant et d'un véhicule précédent et réguler l'accélération longitudinale d'un véhicule suivant et d'un véhicule précédent.

15. Procédé de commande de mouvement de véhicule de régulation automatique, en fonction de la forme d'une route dans une direction de déplacement de véhicule, d'une relation entre l'accélération longitudinale et l'accélération latérale d'au moins l'un parmi un véhicule précédent et un véhicule suivant dans lequel l'accélération dans une direction où une vitesse augmente dans une direction de déplacement de véhicule est positive et l'accélération dans une direction où une vitesse diminue est négative, **caractérisé par** le procédé de commande de mouvement de véhicule régulant l'accélération longitudinale d'au moins l'un parmi un véhicule précédent et un véhicule suivant de sorte que, dans un convoi de véhicules formé d'une pluralité de véhicules :
une distance entre un véhicule précédent et un véhicule suivant augmente avant qu'une valeur absolue d'accélération latérale d'un véhicule suivant ou qu'une courbure d'une trajectoire de déplacement d'un véhicule suivant augmente ou diminue ;
une distance entre un véhicule précédent et un véhicule suivant diminue après une section dans laquelle une valeur absolue d'accélération latérale d'un véhicule précédent et d'un véhicule suivant ou une courbure d'une trajectoire de déplacement d'un véhicule précédent et d'un véhicule suivant augmente ou diminue ; et
une distance entre un véhicule précédent et un véhicule suivant est supérieure ou égale à d0 à tout moment pendant le déplacement, dans lequel d0 est la distance entre un véhicule précédent et un véhicule suivant lorsque les véhicules se déplacent en convoi dans une section en ligne droite de la route.
